# EUROPEAN PATENT APPLICATION

(11) **EP 4 440 166 A1**
(43) Date of publication of application: **02.10.2024**
(21) Application number: 22909802.5
(22) Date of filing: 12.12.2022
(51) Int. Cl.: H04W 8/24, H04W 24/02

(54) **METHOD FOR CONFIGURATION, AND COMMUNICATION APPARATUS**

(30) Priority: 25.12.2021 CN 202111603401; 26.01.2022 CN 202210094691
(71) Applicant: Huawei Technologies Co., Ltd., Shenzhen, Guangdong 518129 (CN)
(72) Inventor: KUANG, Yiru, Shenzhen, Guangdong 518129 (CN); XU, Haibo, Shenzhen, Guangdong 518129 (CN)
(74) Representative: Gill Jennings & Every LLP
(86) International application number: PCT/CN2022/138443
(87) International publication number: WO 2023/116488

(57) **Abstract**

This application provides a configuration method and a communication apparatus, and relates to the communication field. In the method, a terminal device may send first information to an access network device, where the first information indicates to reduce a capability of the terminal device. The access network device may send a first configuration to the terminal device based on a first capability, where the first capability that is of the terminal device and that corresponds to the first configuration is a reduced capability of the terminal device. This avoids a configuration failure caused when the access network device configures a capability that exceeds the capability of the terminal device for the terminal device, and helps improve transmission reliability.

## Description

This application claims priorities to Chinese Patent Application No. 202111603401.2, filed with the China National Intellectual Property Administration on December 25, 2021 and entitled "COMMUNICATION METHOD, UE, AND NETWORK DEVICE", and to Chinese Patent Application No. 202210094691.0, filed with the China National Intellectual Property Administration on January 26, 2022 and entitled "CONFIGURATION METHOD AND COMMUNICATION APPARATUS", both of which are incorporated herein by reference in their entireties.

### TECHNICAL FIELD

This application relates to the communication field, and more specifically, to a configuration method and a communication apparatus in the communication field.

### BACKGROUND

In a process in which a terminal device communicates with an access network device, the access network device needs to configure the terminal device based on a capability of the terminal device. However, the capability of the terminal device may change. If the access network device configures the terminal device based on an original capability of the terminal device, configuration may fail, and further communication may fail, affecting transmission reliability.

### SUMMARY

Embodiments of this application provide a configuration method and a communication apparatus, to improve transmission reliability.

According to a first aspect, a configuration method is provided. The method is applied to a terminal device. The method includes: sending first information to an access network device, where the first information indicates to reduce a capability of the terminal device; and receiving a first configuration from the access network device, where a first capability that is of the terminal device and that corresponds to the first configuration is lower than a second capability of the terminal device.

In the foregoing solution, the terminal device may send the first information to the access network device, where the first information indicates to reduce the capability of the terminal device. The access network device may send the first configuration to the terminal device based on the first capability, where the first capability that is of the terminal device and that corresponds to the first configuration is a reduced capability of the terminal device. This avoids a configuration failure caused when the access network device configures a capability that exceeds the capability of the terminal device for the terminal device, and helps improve transmission reliability.

In addition, the foregoing solution can also avoid a case in which transmission is interrupted because the terminal device needs to disconnect and re-report the capability of the terminal device when the access network device configures the capability that exceeds the capability of the terminal device for the terminal device, thereby improving transmission performance.

Alternatively, the first information is used to request to reduce the capability of the terminal device. Alternatively, the first information is used to request to reduce an initial capability of the terminal device.

Alternatively, the first information is used to request to update the capability of the terminal device. Alternatively, the first information is used to request that an initial capability of the terminal device needs to be updated to a current capability of the terminal device.

Alternatively, the first information is used to request to use a current capability of the terminal device. Alternatively, the first information is used to request to use a current capability of the terminal device, and not to use an initial capability of the terminal device.

Alternatively, the first information is used to request to use a temporary capability of the terminal device. Alternatively, the first information is used to request to use a temporary capability of the terminal device, and not to use an initial capability of the terminal device.

Alternatively, the first information indicates that a current capability of the terminal device is reduced, that is, the current capability of the terminal device is reduced compared with an initial capability of the terminal device.

Alternatively, the first information indicates that a currently used capability needs to be changed.

Optionally, the second capability is a capability that is of the terminal device and that is stored in a core network device. Optionally, the first capability is a capability that is of the terminal device and that is stored in the access network device. If the access network device of the terminal device changes, and a source access network device changes to a target access network device, a capability that is of the terminal device and that is stored by the source access network device needs to be released, and the terminal device needs to report the first capability to the target access network device again. However, in a process in which the access network device of the terminal device changes, the second capability stored by the core network device is not deleted. In other words, for different access network devices, the second capability does not change, but the first capability may change, and certainly may not change. In other words, the second capability may be an inherent capability of the terminal device, and the first capability may be a changed capability of the terminal device compared with the inherent capability.

Optionally, the second capability is the initial capability of the terminal device. The first capability is the temporary capability of the terminal device, or the first capability is the current capability of the terminal device.

In some possible implementations, before the sending first information to an access network device, the method further includes: determining that a current capability of the terminal device is lower than the second capability.

In the foregoing solution, when the current capability of the terminal device is lower than the second capability of the terminal device, the terminal device may send the first information to the access network device. This can avoid a case in which the terminal device blindly sends the first information.

In some possible implementations, the method further includes: receiving a system message broadcast by the access network device, where the system message includes third information, and the third information indicates that the terminal device is allowed to send an indication for reducing the capability of the terminal device.

In the foregoing solution, the terminal device may receive the system message broadcast by the access network device. If the third information in the system message indicates that the terminal device is allowed to send the indication for reducing the capability of the terminal device, the terminal device may send the first information, to indicate to reduce the capability of the terminal device. This avoids a case in which the access network device cannot identify the first information or discard the first information because the terminal device sends the first information when the access network device does not support the terminal device to send the indication for reducing the capability of the terminal device, thereby improving transmission reliability.

In some possible implementations, the first capability that is of the terminal device and that corresponds to the first configuration includes allowing the terminal device to send the current capability. The method further includes: sending second information to the access network device, where the second information indicates the current capability of the terminal device; and receiving a second configuration from the access network device, where the second configuration is determined based on the current capability of the terminal device.

In the foregoing solution, if the first capability that is of the terminal device and that corresponds to the first configuration includes allowing the terminal device to send the current capability, the terminal device may send the second information to the access network device, and indicate the current capability of the terminal device based on the second information. In this way, the access network device may send the second configuration to the terminal device based on the second information. In other words, the capability that is of the terminal device and that corresponds to the first configuration is a conservative capability of the terminal device relative to the initial capability of the terminal device. This avoids a failure for configuring the terminal device. The terminal device may report the current capability of the terminal device to the access network device based on the conservative second configuration, and the access network device may send the second configuration based on the current capability of the terminal device. In this way, the capability that is of the terminal device and that corresponds to the second configuration is the actual current capability of the terminal device. In this way, the terminal device and the access network device can perform data transmission based on the actual capability of the terminal device, thereby improving transmission reliability.

Optionally, the sending second information to the access network device may include: sending the second information based on the first configuration.

In some possible implementations, the method further includes: receiving first filtering information from the access network device; and
the sending second information to the access network device includes: sending the second information to the access network device based on the first filtering information, where the current capability that is of the terminal device and that is indicated by the second information is a capability related to the first filtering information.

In the foregoing solution, the terminal device may determine the current capability of the terminal device based on the first filtering information from the access network device, and send the second information to the access network device. This avoids overheads caused by reporting all capabilities by the terminal device to the access network device.

Optionally, the first filtering information indicates a required capability of the terminal device. The terminal device may reserve the capability that is of the terminal device and that is indicated by the first filtering information in the initial capability of the terminal device, and filter out a capability that is not indicated by the first filtering information in the initial capability of the terminal device. In this way, the second information may indicate a reserved part of the capability of the terminal device. For example, the first filtering information indicates a first band and a second band. The terminal device may reserve a capability related to the first band and the second band, and filter out a capability unrelated to the first band and the second band. This avoids overheads caused when the terminal device needs to send all capabilities of the terminal device to the access network device.

Optionally, the access network device may determine the first filtering information based on an implementation of the access network device, or the access network device may determine the first filtering information based on the initial capability of the terminal device.

In some possible implementations, the current capability of the terminal device includes a capability related to a single carrier of the terminal device and/or a capability related to a primary cell in which the terminal device is currently located.

In the foregoing solution, the current capability that is of the terminal device and that is indicated by the second information includes the capability related to the single carrier of the terminal device and/or the capability related to the primary cell in which the terminal device is currently located. This avoids overheads caused by reporting all capabilities of the terminal device by the terminal device.

In some possible implementations, the second information includes information about a band combination currently supported by the terminal device and/or information about a feature set corresponding to the band combination.

In the foregoing solution, the information about a band combination currently supported by the terminal device and/or the information about a feature set corresponding to the band combination that are/is included in the second information may indicate the current capability of the terminal device. In other words, the information about a band combination currently supported by the terminal device and/or the information about a feature set corresponding to the band combination may represent the current capability of the terminal device.

Optionally, the information about a band combination currently supported by the terminal device includes a correspondence between the band combination currently supported by the terminal device and an index of the currently supported band combination. The information about a feature set corresponding to the currently supported band combination includes a correspondence between the feature set corresponding to the currently supported band combination and an index of the feature set corresponding to the currently supported band combination.

Optionally, the information about a band combination currently supported by the terminal device may indicate the band combination currently supported by the terminal device. In other words, the information about a band combination currently supported by the terminal device may include the band combination currently supported by the terminal device, may include the index of the band combination currently supported by the terminal device, or may not include any explicit indication of the currently supported band combination and may be implicitly indicated by indicating a ranking of the band combination currently supported by the terminal device in a band combination list of the initial capability.

Optionally, the information about a feature set corresponding to the band combination currently supported by the terminal device may indicate the feature set corresponding to the band combination currently supported by the terminal device. In other words, the information about a feature set corresponding to the band combination currently supported by the terminal device may include the feature set corresponding to the band combination currently supported by the terminal device, may include the index of the feature set corresponding to the band combination currently supported by the terminal device, or may not include any explicit indication of the feature set corresponding to the currently supported band combination and may be implicitly indicated by indicating a ranking of the feature set corresponding to the band combination currently supported by the terminal device in a feature set list corresponding to a band combination in the initial capability.

In some possible implementations, the second information includes information about a changed band combination and information about a feature set corresponding to the changed band combination, and the changed band combination is a band combination that is changed by comparing a band combination currently supported by the terminal device and a band combination corresponding to a second capability.

In the foregoing solution, the access network device may determine, based on the changed band combination and a band combination corresponding to the initial capability of the terminal device, the band combination currently supported by the terminal device, and the access network device may determine, based on the information about a feature set of the changed band combination and information about a feature set of a band combination included in the initial capability of the terminal device, information about a feature set corresponding to a band combination included in the current capability of the terminal device. This avoids a case in which the second information sent by the terminal device includes all capabilities of the terminal device, thereby reducing overheads.

Optionally, the changed band combination may be the band combination that is changed by comparing the band combination currently supported by the terminal device and the band combination corresponding to the initial capability of the terminal device. Alternatively, the band combination currently supported by the terminal device and the band combination corresponding to the initial capability of the terminal device are the same, but feature sets corresponding to the band combinations are different. In other words, for the changed band combination, the band combination may change, or the band combination may not change but the feature set corresponding to the band combination changes.

Optionally, the information about a changed band combination includes a correspondence between the changed band combination and an index of the changed band combination. Optionally, the information about a feature set corresponding to the changed band combination includes a correspondence between the feature set corresponding to the changed band combination and an index of the feature set corresponding to the changed band combination.

Optionally, the information about a changed band combination may also indicate the changed band combination. In other words, the information about a changed band combination may include the changed band combination, or may include the index of the changed band combination.

In some possible implementations, the sending first information to an access network device includes: sending the first information to the access network device through an RRC resume complete message; and the receiving a first configuration from the access network device includes: receiving a first RRC reconfiguration message from the access network device, where the first RRC reconfiguration message includes the first configuration.

In the foregoing solution, when entering an RRC connected mode from an RRC inactive mode, the terminal device may send the first information to the access network device through the RRC resume complete message, to avoid a case in which the terminal device needs to send the first information through additional signaling. The access network device may send the first configuration to the terminal device in the first RRC reconfiguration message when the terminal device enters the RRC connected mode.

In some possible implementations, the sending first information to an access network device includes: sending the first information to the access network device through an RRC resume request message; and the receiving a first configuration from the access network device includes: receiving an RRC resume message from the access network device, where the RRC resume message includes the first configuration.

In the foregoing solution, when entering an RRC connected mode from an RRC inactive mode, the terminal device may send the first information to the access network device through the RRC resume request message, to avoid a case in which the terminal device needs to send the first information through additional signaling. The access network device may send the first configuration to the terminal device in the RRC resume message, to avoid a case in which the terminal device needs to send the first configuration through additional signaling.

In some possible implementations, the sending first information to an access network device includes: sending the first information to the access network device through an RRC setup complete message; and the receiving a first configuration from the access network device includes: receiving a second RRC reconfiguration message from the access network device, where the second RRC reconfiguration message includes the first configuration.

In the foregoing solution, when entering an RRC connected mode from an RRC idle mode, the terminal device may send the first information to the access network device through the RRC setup complete message, to avoid a case in which the terminal device needs to send the first information through additional signaling. The access network device may send the first configuration to the terminal device in the second RRC reconfiguration message.

According to a second aspect, a configuration method is provided. The method is applied to an access network device, and includes: receiving first information, where the first information indicates to reduce a capability of a terminal device; and sending a first configuration, where a first capability that is of the terminal device and that corresponds to the first configuration is lower than a second capability of the terminal device.

In the foregoing solution, the access network device may receive the first information, where the first information indicates to reduce the capability of the terminal device. The access network device may send the first configuration to the terminal device based on the first capability, where the first capability that is of the terminal device and that corresponds to the first configuration is a reduced capability of the terminal device. This avoids a configuration failure caused when the access network device configures a capability that exceeds the capability of the terminal device for the terminal device, and helps improve transmission reliability.

In some possible implementations, the second capability is a capability stored in a core network device.

In some possible implementations, the method further includes: broadcasting a system message, where the system message includes third information, and the third information indicates that the terminal device is allowed to send an indication for reducing the capability of the terminal device.

In some possible implementations, the capability that is of the terminal device and that corresponds to the first configuration includes allowing to send a current capability of the terminal device.

In some possible implementations, the method further includes: receiving second information from the terminal device, where the second information indicates the current capability of the terminal device; and sending a second configuration to the terminal device, where the second configuration is determined based on the current capability of the terminal device.

In some possible implementations, the method further includes: sending first filtering information to the terminal device, where the current capability that is of the terminal device and that is indicated by the second information is a capability related to the first filtering information.

In some possible implementations, the current capability of the terminal device includes a capability related to a single carrier of the terminal device and/or a capability related to a primary cell in which the terminal device is currently located.

In some possible implementations, the second information includes information about a band combination currently supported by the terminal device and information about a feature set corresponding to the band combination; or
the second information includes information about a changed band combination and information about a feature set corresponding to the changed band combination, and the changed band combination is a band combination that is changed by comparing a band combination currently supported by the terminal device and a band combination corresponding to a second capability.

In some possible implementations, the receiving first information includes: receiving an RRC resume complete message, where the RRC resume complete message includes the first information; and the sending a first configuration includes: sending a first RRC reconfiguration message, where the first RRC reconfiguration message includes the first configuration.

In some possible implementations, the receiving first information includes: receiving an RRC resume request message, where the RRC resume request message includes the first information; and sending a first configuration includes: sending an RRC resume message, where the RRC resume message includes the first configuration.

In some possible implementations, the receiving first information includes: receiving an RRC setup complete message, where the RRC setup complete message includes the first information; and the sending a first configuration includes: sending a second RRC reconfiguration message, where the second RRC reconfiguration message includes the first configuration.

For descriptions of the second aspect, refer to the descriptions of the first aspect. To avoid repetition, details are not described again.

According to a third aspect, a configuration method is provided. The method is applied to a terminal device. The method includes: receiving a third configuration of the terminal device from an access network device; and indicating, to the access network device, that a capability that is of the terminal device and that corresponds to the third configuration of the terminal device exceeds a current capability of the terminal device.

In the foregoing solution, after the terminal device receives the third configuration, if the current capability of the terminal device is lower than the capability that is of the terminal device and that corresponds to the third configuration, it indicates that the terminal device cannot communicate with the access network device based on the capability that is of the terminal device and that corresponds to the third configuration. Therefore, the terminal device may indicate, to the access network device, that the capability that is of the terminal device and that corresponds to the third configuration of the terminal device exceeds the current capability of the terminal device. In this way, the access network device may learn that the capability currently used by the terminal device is not the capability corresponding to the third configuration, and the access network device does not communicate with the terminal device based on the third configuration, but continues to communicate with the terminal device based on an original configuration. This avoids a communication failure caused when the network device communicates with the terminal device based on the third configuration that exceeds the capability of the terminal device, thereby improving transmission reliability.

Optionally, the capability that is of the terminal device and that corresponds to the third configuration may be an initial capability of the terminal device.

Optionally, the capability that is of the terminal device and that corresponds to the third configuration may be a capability stored in a core network device.

Optionally, the capability that is of the terminal device and that corresponds to the third configuration may be a capability stored in the access network device.

Optionally, the capability that is of the terminal device and that corresponds to the third configuration may be a temporary capability of the terminal device.

Optionally, the third configuration may indicate that the terminal device is allowed to send the current capability.

Optionally, the third configuration may include first filtering information.

In some possible implementations, the indicating, to the access network device, that a capability that is of the terminal device and that corresponds to the third configuration of the terminal device exceeds a current capability of the terminal device includes:

When keeping a current configuration unchanged, the terminal device indicates, to the access network device, that the capability that is of the terminal device and that corresponds to the third configuration of the terminal device exceeds the current capability of the terminal device.

In the foregoing solution, the terminal device may indicate, to the access network device based on the current configuration, that the capability that is of the terminal device and that corresponds to the third configuration of the terminal device exceeds the current capability of the terminal device, to avoid a case in which the terminal device cannot indicate to the access network device.

Optionally, the current configuration may be a default configuration.

Optionally, the current configuration of the terminal device may be a related configuration in a broadcast message.

In some possible implementations, the receiving a third configuration of the terminal device from an access network device includes: receiving a third RRC reconfiguration message from the access network device, where the third RRC reconfiguration message may include the third configuration.

In some possible implementations, the receiving a third configuration of the terminal device from an access network device includes: receiving an RRC resume message from the access network device, where the RRC resume message may include the third configuration.

In some possible implementations, the indicating, to the access network device, that a capability that is of the terminal device and that corresponds to the third configuration of the terminal device exceeds a current capability of the terminal device includes: sending a first message to the access network device, where the first message includes a first field, and an information bit carried in the first field indicates that the capability that is of the terminal device and that corresponds to the third configuration of the terminal device exceeds the current capability of the terminal device.

Optionally, the first message may be an RRC reconfiguration complete message corresponding to the RRC reconfiguration message, and the RRC reconfiguration complete message may include the first field.

Optionally, if the access network device sends the third configuration in the RRC resume message, the first message may be an RRC resume complete message, and the RRC resume complete message may include the first field.

In some possible implementations, the terminal device sends second information to the access network device, where the second information indicates the current capability of the terminal device.

Optionally, the RRC reconfiguration complete message corresponding to the RRC reconfiguration message may include the second information.

Optionally, if the access network device sends the third configuration in the RRC resume message, the RRC resume complete message may include the second information.

In the foregoing solution, the terminal device implicitly indicates, to the access network device by sending the second information to the access network device, that the capability that is of the terminal device and that corresponds to the third configuration of the terminal device exceeds the current capability of the terminal device. In other words, after the access network device receives the current capability that is of the terminal device and that is indicated by the second information sent by the terminal device, the access network device determines that the capability that is of the terminal device and that corresponds to the third configuration exceeds the current capability of the terminal device. This avoids a case in which the terminal device needs to send additional signaling to indicate that the capability that is of the terminal device and that corresponds to the third configuration of the terminal device exceeds the current capability of the terminal device.

In some possible implementations, the capability that is of the terminal device and that corresponds to the third configuration includes allowing the terminal device to send the current capability.

In some possible implementations, the method further includes: sending second information to the access network device, where the second information indicates the current capability of the terminal device; and receiving a second configuration from the access network device, where the second configuration is determined based on the current capability of the terminal device.

In some possible implementations, the method further includes: receiving first filtering information from the access network device; and the sending second information to the access network device includes: sending the second information to the access network device based on the first filtering information, where the current capability that is of the terminal device and that is indicated by the second information is a capability related to the first filtering information.

In some possible implementations, the current capability of the terminal device includes a capability related to a single carrier of the terminal device and/or a capability related to a primary cell in which the terminal device is currently located.

In some possible implementations, the second information includes information about a band combination currently supported by the terminal device and information about a feature set corresponding to the band combination.

In some possible implementations, the second information includes information about a changed band combination and information about a feature set corresponding to the changed band combination, and the changed band combination is a band combination that is changed by comparing a band combination currently supported by the terminal device and a band combination corresponding to a second capability.

For descriptions of the third aspect, refer to the descriptions of the first aspect. To avoid repetition, details are not described again.

According to a fourth aspect, a configuration method is provided. The method is applied to an access network device. The method includes: sending a third configuration of a terminal device to the terminal device; and learning, from the terminal device, that a capability that is of the terminal device and that corresponds to the third configuration of the terminal device exceeds a current capability of the terminal device.

In the foregoing solution, the access network device may send the third configuration to the terminal device. After the terminal device receives the third configuration, if the current capability of the terminal device is lower than the capability that is of the terminal device and that corresponds to the third configuration, it indicates that the terminal device cannot communicate with the access network device based on the capability that is of the terminal device and that corresponds to the third configuration. Therefore, the terminal device may indicate, to the access network device, that the capability that is of the terminal device and that corresponds to the third configuration of the terminal device exceeds the current capability of the terminal device. In this way, the access network device may learn that the capability currently used by the terminal device is not the capability corresponding to the third configuration, and the access network device does not communicate with the terminal device based on the third configuration, but continues to communicate with the terminal device based on an original configuration. This avoids a communication failure caused when the network device communicates with the terminal device based on the third configuration that exceeds the capability of the terminal device, thereby improving transmission reliability.

In some possible implementations, the capability that is of the terminal device and that corresponds to the third configuration is a capability stored in a core network device.

In some possible implementations, the learning, from the terminal device, that a capability that is of the terminal device and that corresponds to the third configuration of the terminal device exceeds a current capability of the terminal device includes:
receiving a first message from the terminal device, where the first message includes a first field, and an information bit carried in the first field indicates that the capability that is of the terminal device and that corresponds to the third configuration of the terminal device exceeds the current capability of the terminal device; or
receiving second information from the terminal device, where the second information indicates the current capability of the terminal device.

In some possible implementations, the capability that is of the terminal device and that corresponds to the third configuration includes allowing the terminal device to send the current capability.

In some possible implementations, the method further includes: receiving second information from the terminal device, where the second information indicates the current capability of the terminal device; and sending a second configuration to the terminal device, where the second configuration is determined based on the current capability of the terminal device.

In some possible implementations, the method further includes: sending first filtering information to the terminal device, where the current capability that is of the terminal device and that is indicated by the second information is a capability related to the first filtering information.

In some possible implementations, the current capability of the terminal device includes a capability related to a single carrier of the terminal device and/or a capability related to a primary cell in which the terminal device is currently located.

In some possible implementations, the second information includes information about a band combination currently supported by the terminal device and information about a feature set corresponding to the band combination.

In some possible implementations, the second information includes information about a changed band combination and information about a feature set corresponding to the changed band combination, and the changed band combination is a band combination that is changed by comparing a band combination currently supported by the terminal device and a band combination corresponding to a second capability.

For descriptions of the fourth aspect, refer to the descriptions of the first aspect and the third aspect. To avoid repetition, details are not described again.

According to a fifth aspect, a configuration method is provided. The method is applied to a primary access network device. The method includes:

The primary access network device and a secondary access network device determine, based on a current capability of a terminal device, a third capability used to configure the terminal device. The primary access network device configures the terminal device based on the third capability.

In the foregoing solution, when the terminal device keeps connected to both the primary access network device and the secondary access network device, the primary access network device and the secondary access network device may determine, based on the current capability of the terminal device, the third capability used to configure the terminal device, and configure the terminal device based on the third capability, to avoid a case in which the primary access network device and the secondary access network device cannot configure the terminal device when a capability of the terminal device changes.

In some possible implementations, that the primary access network device and a secondary access network device determine, based on a current capability of a terminal device, a third capability used to configure the terminal device includes:
sending a second message to the secondary access network device, where the second message indicates fifth information and/or sixth information, the fifth information indicates to determine, based on the current capability of the terminal device, a capability used to configure the terminal device, and the sixth information indicates first candidate capability information; and receiving a response message of the second message from the secondary access network device, where the response message indicates the third capability, and the third capability is obtained based on the first candidate capability information.

In the foregoing solution, the primary access network device may send the second message to the secondary access network device, and the second message indicates the fifth information and/or the sixth information. If the second message indicates the fifth information, the secondary access network device may determine, based on the fifth information, to determine, based on the current capability of the terminal device instead of an initial capability of the terminal device, the capability used to configure the terminal device. This avoids a case in which the secondary access network device does not know how to select a capability of the terminal device based on which the third capability is determined. In addition, the secondary access network device may determine the third capability based on the first candidate capability information indicated by the sixth information, and indicate the third capability through the response message. In other words, the second message is a message used to negotiate and determine the third capability, and the second message used to negotiate and determine the third capability may also indicate to determine, based on the current capability of the terminal device, the third capability used to configure the terminal device.

In some possible implementations, the current capability of the terminal device included in the second message indicates the fifth information.

Optionally, after the sending a second message, the method further includes: The primary access network device indicates the current capability of the terminal device to the secondary access network device.

In the foregoing solution, after the primary access network device indicates the current capability of the terminal device to the secondary access network device, the primary access network device may include the current capability of the terminal device in the second message sent to the secondary access network device each time, to indicate to determine, based on the current capability of the terminal device instead of the initial capability of the terminal device, the capability used to configure the terminal device.

In some possible implementations, the second message includes a second field, and an information bit carried in the second field indicates the fifth information.

Optionally, the second message includes a fifth field, an information bit carried in the fifth field indicates the sixth information, and the sixth information indicates the first candidate capability information.

In the foregoing solution, when sending the second message to the secondary access network device, the primary access network device may indicate, based on the information bit carried in the second field in the second message, to determine, based on the current capability of the terminal device, the capability used to configure the terminal device.

In some possible implementations, the second message includes a third field, an information bit carried in the third field indicates the sixth information, and a location of the third field in the second message indicates the fifth information.

The response message further indicates the third capability and the fifth information, the response message includes a fourth field, an information bit carried in the fourth field indicates the third capability, and a location of the fourth field in the response message indicates the fifth information.

In the foregoing solution, when indicating the sixth information to the secondary access network device, the primary access network device may indicate, based on the location of the third field that carries the sixth information, to determine, based on the current capability of the terminal device instead of the initial capability of the terminal device, the capability used to configure the terminal device. In this implicit indication manner, signaling overheads can be reduced. In addition, the location of the fourth field in the response message indicates to determine, based on the current capability of the terminal device, the third capability used to configure the terminal device.

Optionally, if the second message carries the third field, it indicates to determine, based on the current capability of the terminal device, the capability used to configure the terminal device. If the second message does not carry the third field, it indicates to determine, based on the initial capability of the terminal device, the capability used to configure the terminal device. The secondary access network device determines, based on the third field, whether to determine, based on the current capability of the terminal device, the capability used to configure the terminal device.

Optionally, when the secondary access network device sends the response message of the second message to the primary access network device, the fourth field indicating the third capability indicates to determine, based on the current capability of the terminal device, the third capability used to configure the terminal device. For example, if the response message of the second message carries the fourth field, it indicates to determine, based on the current capability of the terminal device, the third capability used to configure the terminal device. If the response message of the second message does not carry the fourth field, it indicates to determine, based on the initial capability of the terminal device, the third capability used to configure the terminal device. The primary access network device determines, based on the fourth field, whether the secondary access network device determines, based on the current capability of the terminal device, the third capability used to configure the terminal device.

In some possible implementations, the first candidate capability information is information about a candidate band combination, and the information about a candidate band combination includes an index of the candidate band combination and an index of a feature set corresponding to the candidate band combination. The response message includes an index of a target band combination selected from the index of the candidate band combination and an index of a target feature set selected from the selected index of the feature set corresponding to the target band combination, where the index of the target band combination and the index of the target feature set indicate the third capability.

Optionally, the index of the band combination may be replaced with an identifier of the band combination.

Optionally, the index of the feature set may be replaced with an identifier of the feature set.

In some possible implementations, before the primary access network device and the secondary access network device determine, based on the current capability of the terminal device, the third capability used to configure the terminal device, the method further includes:
receiving second information from the terminal device, where the second information indicates the current capability of the terminal device; and
sending seventh information to the secondary access network device, where the seventh information indicates the current capability of the terminal device.

Optionally, if the primary access network device has sent the seventh information to the secondary access network device, it implicitly indicates the secondary access network device to determine, based on the current capability of the terminal device, the third capability used to configure the terminal device.

In some possible implementations, the second information includes information about a band combination currently supported by the terminal device and information about a feature set corresponding to the band combination. The information about a band combination includes a correspondence between the band combination currently supported by the terminal device and an index of the currently supported band combination. The information about a feature set corresponding to the band combination includes a correspondence between the feature set corresponding to the band combination and an index of the feature set corresponding to the band combination. The seventh information includes the second information.

The index of the candidate band combination is selected from the index of the currently supported band combination, and the index of the feature set corresponding to the candidate band combination is selected from the index of the feature set corresponding to the band combination.

In some possible implementations, the second information includes information about a changed band combination and information about a feature set corresponding to the changed band combination, and the changed band combination is a band combination that is changed by comparing a band combination currently supported by the terminal device and a band combination corresponding to a second capability of the terminal device.

The information about a changed band combination includes a correspondence between the changed band combination and an index of the changed band combination. The information about a feature set corresponding to the changed band combination includes a correspondence between the feature set corresponding to the changed band combination and an index of the feature set corresponding to the changed band combination. The seventh information includes the second information.

The index of the candidate band combination is determined based on the index of the changed band combination and an index of the band combination corresponding to the second capability of the terminal device, and the index of the feature set corresponding to the candidate band combination is determined based on the index of the feature set corresponding to the changed band combination and an index of a feature set corresponding to the band combination corresponding to the second capability.

In some possible implementations, the current capability of the terminal device includes a capability related to a single carrier of the terminal device and/or a capability related to a primary cell in which the terminal device is currently located.

In some possible implementations, the current capability of the terminal device includes a capability related to first filtering information, and the first filtering information is sent by the primary access network device to the terminal device.

In some possible implementations, the method further includes:
learning, from the secondary access network device, whether the secondary access network device supports to determine, based on the current capability of the terminal device, the capability used to configure the terminal device.

That the primary access network device and a secondary access network device determine, based on a current capability of a terminal device, a third capability used to configure the terminal device includes:
If the primary access network device supports to determine, based on the current capability of the terminal device, the capability used to configure the terminal device, and the secondary access network device supports to determine, based on the current capability of the terminal device, the capability used to configure the terminal device, the primary access network device and the secondary access network device determine, based on the current capability of the terminal device, the third capability used to configure the terminal device.

In the foregoing solution, when both the primary access network device and the secondary access network device support to determine, based on the current capability of the terminal device, the capability used to configure the terminal device, the primary access network device and the secondary access network device determine, based on the current capability of the terminal device, the third capability used to configure the terminal device.

For descriptions of the fifth aspect, refer to the descriptions of the first aspect. To avoid repetition, details are not described again.

According to a sixth aspect, a configuration method is provided. The method is applied to a secondary access network device. The method includes:

The secondary access network device and a primary access network device determine, based on a current capability of a terminal device, a third capability used to configure the terminal device. The secondary access network device configures the terminal device based on the third capability.

In the foregoing solution, when the terminal device keeps connected to both the primary access network device and the secondary access network device, the primary access network device and the secondary access network device may determine, based on the current capability of the terminal device, the third capability used to configure the terminal device, and configure the terminal device based on the third capability, to avoid a case in which the primary access network device and the secondary access network device cannot configure the terminal device when a capability of the terminal device changes.

In some possible implementations, that the secondary access network device and a primary access network device determine, based on a current capability of a terminal device, a third capability used to configure the terminal device includes:
receiving a second message from the primary access network device, where the second message indicates fifth information and/or sixth information, the fifth information indicates to determine, based on the current capability of the terminal device, a capability used to configure the terminal device, and the sixth information indicates first candidate capability information; and
sending a response message of the second message to the primary access network device, where the response message indicates the third capability, and the third capability is obtained based on the first candidate capability information.

In some possible implementations, the current capability of the terminal device included in the second message indicates the fifth information.

Optionally, after the sending a second message, the method further includes: The primary access network device learns the current capability of the terminal device from the secondary access network device.

In some possible implementations, the second message includes a second field, and an information bit carried in the second field indicates the fifth information.

Optionally, the second message includes a fifth field, an information bit carried in the fifth field indicates the sixth information, and the sixth information indicates the first candidate capability information.

In some possible implementations, the second message includes a third field, an information bit carried in the third field indicates the sixth information, and a location of the third field in the second message indicates the fifth information.

The response message further indicates the third capability and the fifth information, the response message includes a fourth field, an information bit carried in the fourth field indicates the third capability, and a location of the fourth field in the response message indicates the fifth information.

In some possible implementations, the first candidate capability information is information about a candidate band combination, and the information about a candidate band combination includes an index of the candidate band combination and an index of a feature set corresponding to the candidate band combination. The response message includes an index of a target band combination selected from the index of the candidate band combination and an index of a target feature set selected from the selected index of the feature set corresponding to the target band combination, where the index of the target band combination and the index of the target feature set indicate the third capability.

In some possible implementations, before the secondary access network device and the primary access network device determine, based on the current capability of the terminal device, the third capability used to configure the terminal device, the method further includes:
receiving seventh information from the primary access network device, where the seventh information indicates the current capability of the terminal device.

Optionally, if the secondary access network device has received the seventh information from the primary access network device, it implicitly indicates the secondary access network device to determine, based on the current capability of the terminal device, the third capability used to configure the terminal device.

In some possible implementations, the second information includes information about a band combination currently supported by the terminal device and information about a feature set corresponding to the band combination. The information about a band combination includes a correspondence between the band combination currently supported by the terminal device and an index of the currently supported band combination. The information about a feature set corresponding to the band combination includes a correspondence between the feature set corresponding to the band combination and an index of the feature set corresponding to the band combination. The seventh information includes the second information.

The index of the candidate band combination is selected from the index of the currently supported band combination, and the index of the feature set corresponding to the candidate band combination is selected from the index of the feature set corresponding to the band combination.

In some possible implementations, the second information includes information about a changed band combination and information about a feature set corresponding to the changed band combination, and the changed band combination is a band combination that is changed by comparing a band combination currently supported by the terminal device and a band combination corresponding to a second capability of the terminal device.

The information about a changed band combination includes a correspondence between the changed band combination and an index of the changed band combination. The information about a feature set corresponding to the changed band combination includes a correspondence between the feature set corresponding to the changed band combination and an index of the feature set corresponding to the changed band combination. The seventh information includes the second information.

The index of the candidate band combination is determined based on the index of the changed band combination and an index of the band combination corresponding to the second capability of the terminal device, and the index of the feature set corresponding to the candidate band combination is determined based on the index of the feature set corresponding to the changed band combination and an index of a feature set corresponding to the band combination corresponding to the second capability.

In some possible implementations, the current capability of the terminal device includes a capability related to a single carrier of the terminal device and/or a capability related to a primary cell in which the terminal device is currently located.

In some possible implementations, the current capability of the terminal device includes a capability related to first filtering information, and the first filtering information is sent by the primary access network device to the terminal device.

In some possible implementations, the method further includes: indicating, to the primary access network device, whether the secondary access network device supports to determine, based on the current capability of the terminal device, the capability used to configure the terminal device.

For descriptions of the sixth aspect, refer to the descriptions of the fifth aspect. To avoid repetition, details are not described again.

According to a seventh aspect, a configuration method is provided. The method includes:
sending second information to an access network device, where the second information indicates a current capability of a terminal device, and the current capability of the terminal device includes a capability related to a single carrier of the terminal device and/or a capability related to a primary cell in which the terminal device is currently located; and
receiving a second configuration that is configured by the access network device based on the second information.

In the foregoing solution, the second information sent by the terminal device to the access network device may indicate the current capability of the terminal device. The current capability of the terminal device includes the capability related to the single carrier of the terminal device and/or the capability related to the primary cell in which the terminal device is currently located. The second information neither indicates a capability unrelated to the single carrier of the terminal device nor indicates a capability unrelated to the primary cell in which the terminal device is currently located, so that signaling overheads can be reduced.

In some possible implementations, the method includes: receiving eighth information from the access network device, where the eighth information indicates that the terminal device is allowed to send the current capability.

That a terminal device sends second information to an access network device includes:
sending the second information to the access network device based on the eighth information.

In some possible implementations, the second information includes information about a band combination currently supported by the terminal device and information about a feature set corresponding to the band combination; or
the second information includes information about a changed band combination and information about a feature set corresponding to the changed band combination, and the changed band combination is a band combination that is changed by comparing a band combination currently supported by the terminal device and a band combination corresponding to a second capability of the terminal device.

Optionally, the access network device in the seventh aspect may be replaced with the primary access network device in the fifth aspect.

For descriptions of the seventh aspect, refer to the descriptions of the first aspect. To avoid repetition, details are not described again.

According to an eighth aspect, a configuration method is provided. The method is applied to an access network device. The method includes:
receiving second information, where the second information indicates a current capability of a terminal device, and the current capability of the terminal device includes a capability related to a single carrier of the terminal device and/or a capability related to a primary cell in which the terminal device is currently located; and
sending a second configuration to the terminal device based on the second information.

In the foregoing solution, the second information sent by the terminal device to the access network device may indicate the current capability of the terminal device. The current capability of the terminal device includes the capability related to the single carrier of the terminal device and/or the capability related to the primary cell in which the terminal device is currently located. The second information neither indicates a capability unrelated to the single carrier of the terminal device nor indicates a capability unrelated to the primary cell in which the terminal device is currently located, so that signaling overheads can be reduced.

In some possible implementations, the method includes: sending eighth information to the terminal device, where the eighth information indicates that the terminal device is allowed to send the current capability.

In some possible implementations, the second information includes information about a band combination currently supported by the terminal device and information about a feature set corresponding to the band combination; or
the second information includes information about a changed band combination and information about a feature set corresponding to the changed band combination, and the changed band combination is a band combination that is changed by comparing a band combination currently supported by the terminal device and a band combination corresponding to a second capability of the terminal device.

Optionally, the access network device in the eighth aspect may be replaced with the primary access network device in the fifth aspect.

For descriptions of the eighth aspect, refer to the descriptions of the first aspect. To avoid repetition, details are not described again.

According to a ninth aspect, a configuration method is provided. The method is applied to a terminal device. The method includes:
receiving first filtering information from an access network device; and
sending second information to the access network device based on the first filtering information, where the second information indicates a current capability of the terminal device, and the current capability that is of the terminal device and that is indicated by the second information is a capability related to the first filtering information.

In the foregoing solution, the second information sent by the terminal device to the access network device may indicate the current capability of the terminal device, the current capability of the terminal device is a capability obtained based on the first filtering information, and the second information does not indicate a capability unrelated to the first filtering information, so that signaling overheads can be reduced.

In some possible implementations, the method further includes:
receiving eighth information from the access network device, where the eighth information indicates that the terminal device is allowed to send the current capability.

That the terminal device sends second information to the access network device includes: sending the second information to the access network device based on the eighth information.

In some possible implementations, the second information includes information about a band combination currently supported by the terminal device and information about a feature set corresponding to the band combination.

In some possible implementations, the second information includes information about a changed band combination and information about a feature set corresponding to the changed band combination, and the changed band combination is a band combination that is changed by comparing a band combination currently supported by the terminal device and a band combination corresponding to a second capability.

Optionally, the access network device in the ninth aspect may be replaced with the primary access network device in the fifth aspect.

For descriptions of the ninth aspect, refer to the descriptions of the first aspect. To avoid repetition, details are not described again.

According to a tenth aspect, a configuration method is provided. The method is applied to an access network device. The method includes:
sending first filtering information; and
receiving second information, where the second information indicates a current capability of the terminal device, and the current capability that is of the terminal device and that is indicated by the second information is a capability related to the first filtering information.

In the foregoing solution, the second information sent by the terminal device to the access network device may indicate the current capability of the terminal device, the current capability of the terminal device is a capability obtained based on the first filtering information, and the second information does not indicate a capability unrelated to the first filtering information, so that signaling overheads can be reduced.

In some possible implementations, the method further includes: sending eighth information, where the eighth information indicates that the terminal device is allowed to send the current capability.

In some possible implementations, the second information includes information about a band combination currently supported by the terminal device and information about a feature set corresponding to the band combination.

In some possible implementations, the second information includes information about a changed band combination and information about a feature set corresponding to the changed band combination, and the changed band combination is a band combination that is changed by comparing a band combination currently supported by the terminal device and a band combination corresponding to a second capability.

Optionally, the access network device in the tenth aspect may be replaced with the primary access network device in the fifth aspect.

For descriptions of the tenth aspect, refer to the descriptions of the first aspect. To avoid repetition, details are not described again.

According to an eleventh aspect, this application provides an apparatus. The apparatus is included in an electronic device, and the apparatus has functions of implementing behavior of the devices in the foregoing aspects and the possible implementations of the foregoing aspects. The function may be implemented by hardware, or may be implemented by executing corresponding software by hardware. The hardware or the software includes one or more modules or units corresponding to the foregoing function, for example, a determining module or unit, or a transceiver module or unit.

Optionally, the apparatus may be the foregoing terminal device, access network device, primary access network device, or secondary access network device.

According to a twelfth aspect, this application provides an apparatus. The apparatus includes a processor, the processor is coupled to a memory, the memory is configured to store a computer program or instructions, and the processor is configured to execute the computer program or instructions stored in the memory, so that the methods in the foregoing aspects and the possible implementations of the foregoing aspects are performed.

For example, the processor is configured to execute the computer program or instructions stored in the memory, so that the apparatus performs the methods in the foregoing aspects and the possible implementations of the foregoing aspects.

Optionally, the apparatus includes one or more processors.

Optionally, the apparatus may further include a memory coupled to the processor.

Optionally, the apparatus may include one or more memories.

Optionally, the memory and the processor may be integrated together or disposed separately.

Optionally, the apparatus may further include a transceiver.

Optionally, the apparatus may be the foregoing terminal device, access network device, primary access network device, or secondary access network device.

According to a thirteenth aspect, this application provides an electronic device, including one or more processors, a memory, a plurality of application programs, and one or more computer programs. The one or more computer programs are stored in the memory. The one or more computer programs include instructions. When the instructions are executed by the electronic device, the electronic device is enabled to perform the information processing method in any one of the foregoing aspects or the possible implementations of the foregoing aspects, or the configuration method described in any embodiment of this application.

Optionally, the electronic device may further include a touchscreen and/or a camera. The touchscreen includes a touch-sensitive surface and a display.

According to a fourteenth aspect, this application provides a computer-readable storage medium, including computer instructions. When the computer instructions are run on an electronic device, the electronic device is enabled to perform the configuration method in any one of the foregoing aspects or the possible implementations of the foregoing aspects, or the configuration method described in any embodiment of this application.

According to a fifteenth aspect, this application provides a computer program product. When the computer program product runs on an electronic device, the electronic device is enabled to perform the configuration method in any one of the foregoing aspects or the possible implementations of the foregoing aspects, or the configuration method described in any embodiment of this application.

According to a sixteenth aspect, this application provides an apparatus, including units configured to perform the method described in any embodiment of this application.

### BRIEF DESCRIPTION OF DRAWINGS

FIG. 1 is a diagram of an application scenario according to an embodiment of this application;
FIG. 2 is a diagram of another application scenario according to an embodiment of this application;
FIG. 3 is a diagram of a method for entering an RRC connected mode from an RRC idle mode according to an embodiment of this application;
FIG. 4 is a diagram of a method for entering an RRC connected mode from an RRC inactive mode according to an embodiment of this application;
FIG. 5 is a diagram of a configuration method according to an embodiment of this application;
FIG. 6 is a diagram of another configuration method according to an embodiment of this application;
FIG. 7 is a diagram of still another configuration method according to an embodiment of this application;
FIG. 8 is a diagram of still another configuration method according to an embodiment of this application;
FIG. 9 is a diagram of still another configuration method according to an embodiment of this application;
FIG. 10 is a diagram of still another configuration method according to an embodiment of this application;
FIG. 11 is a diagram of still another configuration method according to an embodiment of this application;
FIG. 12 is a diagram of still another configuration method according to an embodiment of this application;
FIG. 13 is a diagram of still another configuration method according to an embodiment of this application;
FIG. 14 is a diagram of still another configuration method according to an embodiment of this application;
FIG. 15 is a diagram of still another configuration method according to an embodiment of this application;
FIG. 16 is a diagram of still another configuration method according to an embodiment of this application; and
FIG. 17 is a schematic block diagram of a communication apparatus according to an embodiment of this application.

### DESCRIPTION OF EMBODIMENTS

The following describes the technical solutions in embodiments of this application with reference to the accompanying drawings in embodiments of this application.

The technical solutions in embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

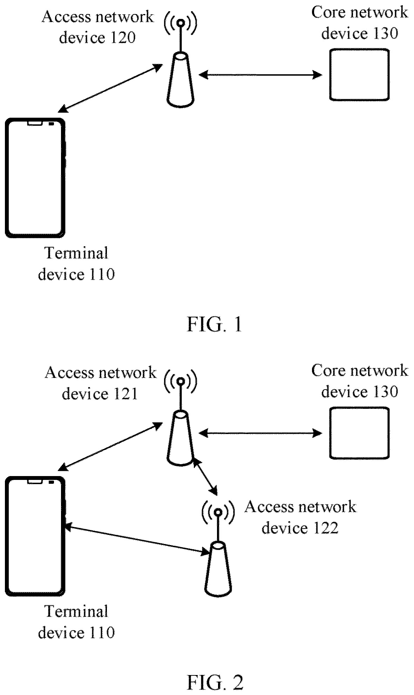

FIG. 1 is a diagram of an application scenario applied to an embodiment of this application. As shown in FIG. 1, a system includes a terminal device 110, an access network device 120, and a core network device 130.

The terminal device 110 is also referred to as user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user communication apparatus, or the like.

The terminal device 110 may be a device that provides voice/data connectivity for a user, for example, a hand-held device or an in-vehicle device with a wireless connection function. Currently, examples of some terminal devices include: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (PDA), a handheld device with a wireless communication capability, a computing device or another processing device connected to a wireless modem, a vehicle-mounted device, a wearable device, a terminal device in a 5G network, a terminal device in a future evolved public land mobile network (public land mobile network, PLMN), or the like. This is not limited in this application. For example, the terminal device 110 is configured to receive a paging message from the access network device 120.

The access network device 120 may also be referred to as a radio access network (radio access network, RAN) or a radio access network device. The access network device 120 may be a transmission reception point (transmission reception point, TRP), or may be an evolved NodeB (evolved NodeB, eNB or eNodeB) in an LTE system, or may be a home NodeB (for example, a home evolved NodeB, or a home NodeB, HNB), or a base band unit (base band unit, BBU), or may be a radio controller in a cloud radio access network (cloud radio access network, CRAN) scenario. Alternatively, the access network device 120 may be a relay station, an access point, a vehicle-mounted device, a wearable device, a network device in a 5G network, a network device in a future evolved PLMN network, or the like, or may be an access point (access point, AP) in a WLAN, or may be a gNB in an NR system. Alternatively, the access network device 120 may be a metro base station, a micro base station, a pico base station, a femto base station, or the like. This is not limited in this application. For example, the access network device 120 is configured to send a paging message to page the terminal device 110.

In a network structure, the access network device 120 may include a central unit (central unit, CU) node, a distributed unit (distributed unit, DU) node, or a radio access network (radio access network, RAN) device including a CU node and a DU node, or a device including a control plane CU node (CU-CP node), a user plane CU node (CU-UP node), and a DU node.

The core network device 130 is configured to manage one or more access network devices 120. For example, the core network device 130 is configured to send, to the access network device 120, information used by the access network device to send a paging message, for example, including an identifier of the terminal device 110 and a group number of the terminal device 110. For example, the core network device 130 may include at least one of a core network access and mobility management function (core access and mobility management function, AMF), a user plane function (user plane function, UPF) network element, a session management function (session management function, SMF) network element, a data network (data network, DN) network element, a unified data repository (unified data repository, UDR) network element, and a unified data management (unified data management, UDM) network element.

In an embodiment, the terminal device 110 may communicate with the access network device 120 by using a carrier aggregation (carrier aggregation, CA) technology. Cells on different frequencies of the access network device 120 may simultaneously perform data transmission with the terminal device, so that a carrier aggregation (carrier aggregation, CA) function can be implemented. In the CA technology, one cell is a primary cell (primary cell, PCell), and other cells are secondary cells (secondary cell, SCell).

In an application scenario, as shown in FIG. 2, the terminal device 110 may communicate with the access network device by using a dual-connectivity (dual connectivity, DC) or multi-connectivity technology, and the terminal device may be connected to both an access network device 121 and an access network device 122. The access network device 121 and the access network device 122 may simultaneously provide a data receiving and sending service for the terminal device 110. In this way, the terminal device 110 may simultaneously use radio resources of the two access network devices, so that a rate of data transmitted by the terminal device 110 can be increased. There is a signaling interface between the access network device 121 and the access network device 122. The access network device 121 and the access network device 122 may determine a capability of the terminal device 110 through negotiation through the signaling interface. The access network device 121 and the access network device 122 may configure the terminal device 110 based on the capability of the terminal device 110.

In FIG. 2, the access network device 121 may be a master base station (master node, MN), the access network device 122 may be a secondary base station (secondary node, SN), and the master base station and the secondary base station support CA. A serving cell of the master base station may be a PCell of the terminal device 110, a serving cell of the secondary base station may be a primary secondary cell (primary secondary cell, PSCell) of the terminal device 110, and another cell that serves the terminal device 110 and that is of the master base station and the secondary base station may be an SCell. A plurality of cells on different frequencies may simultaneously perform data transmission with the terminal device 110, to implement a CA function. The plurality of cells on different frequencies may be a plurality of cells of the MN, a plurality of cells of the SN, or a plurality of cells of the MN and the SN.

A number is omitted in the following for description. For example, the "terminal device 110" may be a "terminal device", and the "access network device" may be the access network device 120 in FIG. 1, or the access network device 121 or the access network device 122 in FIG. 2.

The following describes three modes of the terminal device at a radio resource idle (radio resource control, RRC) layer. At the RRC layer, the terminal device has three modes: an RRC connected (RRC_CONNECTED) mode, an RRC idle (RRC_IDLE) mode, and an RRC inactive (RRC_INACTIVE) mode. The following describes the three modes.

### RRC connected mode

If the terminal device establishes an RRC connection to the access network device, the terminal device is in the RRC connected mode. In the RRC connected mode, a user plane connection and a control plane connection may be established between the terminal device and the access network device. The terminal device may perform user plane data transmission with the access network device through the user plane connection, and perform control plane signaling transmission with the access network device through the control plane connection.

### RRC idle mode

If the terminal device does not establish an RRC connection to the access network device, the terminal device may be in the RRC idle mode. When the terminal device is in the RRC idle mode, the terminal device may perform public land mobile network (public land mobile network, PLMN) selection, the terminal device may receive a system message broadcast by the access network device, the terminal device may perform cell reselection, and the terminal device may receive a paging message.

### RRC inactive mode

After the terminal device establishes an RRC connection to the access network device, the terminal device may enter the RRC inactive mode. If the terminal device has no data transmission requirement with the access network device in a preset time period of the RRC connected mode, the access network device may determine that the terminal device enters the RRC inactive mode. The access network device may send, to the terminal device, an RRC release with suspend indication (RRC Release with suspend indication) message. After receiving the RRC release with suspend indication message, the terminal device reserve a context of the terminal device, and enters the RRC inactive mode.

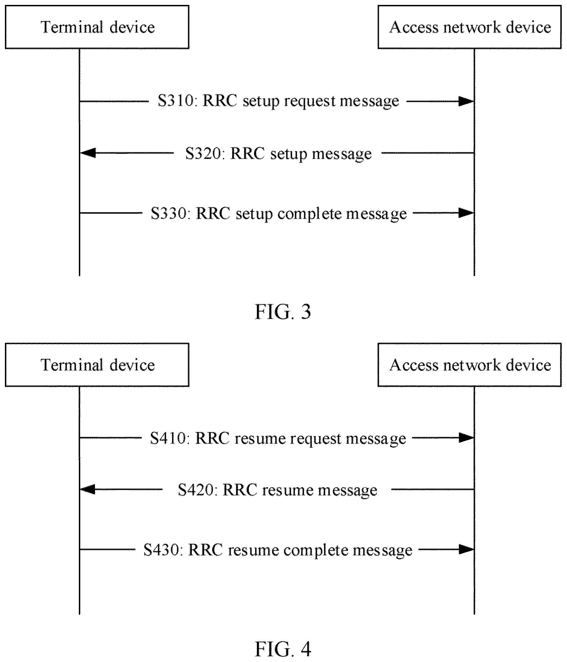

When the terminal device needs to receive downlink data sent by the access network device or send uplink data to the access network device in the RRC idle mode, the terminal device needs to enter the RRC connected mode. The following describes a process in which a terminal device enters an RRC connected mode from an RRC idle mode with reference to FIG. 3. As shown in FIG. 3, the following steps are included.

S310: A terminal device sends an RRC setup request (RRC Setup Request) message to an access network device.

Optionally, before S310, the terminal device is in an RRC idle mode. When the terminal device needs to send uplink data to the access network device, the terminal device may be triggered to perform S310.

Optionally, before S310, when the access network device needs to send data to the terminal device, the access network device may send a paging message, where the paging message includes an identifier of the terminal device. After receiving the paging message sent by the access network device, the terminal device performs S310.

Optionally, the RRC setup request (RRC Setup Request) message may include at least one of an identifier of the terminal device or a reason for establishing the RRC connection.

S320: The access network device sends an RRC setup (RRC Setup) message to the terminal device, and the terminal device receives the RRC (RRC Setup) message sent by the access network device.

S320 includes: The access network device sends the RRC setup (RRC Setup) message to the terminal device in response to the RRC setup request (RRC Setup Request) message.

S330: The terminal device sends an RRC setup complete (RRC Setup Complete) message to the access network device.

S330 includes: The terminal device sends the RRC setup complete (RRC Setup Complete) message to the access network device in response to the RRC setup (RRC Setup) message.

After S310 to S330, the terminal device enters the RRC connected mode from the RRC idle mode.

With reference to FIG. 4, the following describes a process in which a terminal device enters an RRC connected mode from an RRC inactive mode. As shown in FIG. 4, the process includes the following steps.

S410: A terminal device sends an RRC resume request (RRC Resume Request) message to an access network device.

Optionally, before S410, the terminal device is in an RRC inactive mode. When the terminal device needs to send uplink data to the access network device, the terminal device may be triggered to perform S410.

Optionally, before S410, when the access network device needs to send data to the terminal device, the access network device may send a paging message, where the paging message includes an identifier of the terminal device. After receiving the paging message sent by the access network device, the terminal device performs S410.

Optionally, the RRC resume request (RRC Resume Request) message may include at least one of a resume identifier, a resume integrity message authentication code, or a resume reason.

S420: The access network device sends an RRC resume (RRC Resume) message to the terminal device, and the terminal device receives the RRC resume (RRC Resume) message sent by the access network device.

S420 includes: The access network device sends an RRC resume (RRC Resume) message to the terminal device in response to the RRC resume request (RRC Resume Request) message.

S430: The terminal device sends an RRC resume complete (RRC Resume Complete) message to the access network device.

S430 includes: The terminal device sends the RRC resume complete (RRC Resume Complete) message to the terminal device in response to the RRC resume (RRC Resume) message.

After S410 to S430, the terminal device enters the RRC connected mode from the RRC inactive mode.

In a process in which the terminal device communicates with the access network device, the access network device needs to configure the terminal device, and the terminal device communicates with the access network device based on the configuration provided by the access network device for the terminal device. In a process in which the access network device configures the terminal device, the configuration needs to be performed based on a capability of the terminal device.

In some scenarios, the capability of the terminal device may change. For example, in a multi-card scenario, two or more calling cards may be simultaneously installed on one mobile phone. For example, the calling card may be a subscriber identity module (subscriber identity module, SIM) or a universal subscriber identity module (universal subscriber identity module, USIM) card. The mobile phone may separately register with different networks by using the two or more calling cards, for example, different access network devices and/or different core network devices. Alternatively, the mobile phone may register with a same network by using the two or more calling cards, for example, a same access network device or a same core network device. It may be understood that one card corresponds to one terminal device or one UE, and a plurality of cards in one mobile phone are understood as a plurality of terminal devices or a plurality of UEs. For example, the mobile phone includes a card 1 and a card 2. The card 1 is in an RRC connected mode, and the card 2 enters an RRC connected mode from an RRC idle mode or an RRC inactive mode. From a perspective of the card 1, when only the card 1 of the mobile phone is in the RRC connected mode, the card 1 may occupy all capabilities of the mobile phone. When the card 2 enters the RRC connected mode, the card 2 also needs to occupy some capabilities of the mobile phone to implement a normal communication function. In this case, the card 1 may change from occupying all the capabilities of the mobile phone to occupying some capabilities of the mobile phone. In this case, the capability of the card 1 may change and needs to be reported again.

In some other scenarios, a temperature of the terminal device is excessively high. To reduce the temperature of the terminal device, the terminal device may actively reduce a capability of the terminal device, to reduce the temperature.

In Embodiment 1, a terminal device may register with a core network device in an RRC idle mode. In a registration process, the terminal device may report a capability of the terminal device to an access network device and store the capability in the core network device. The capability stored in the core network device may be referred to as an "initial capability of the terminal device". Then, when the terminal device enters an RRC connected mode from the RRC idle mode to access the access network device, the access network device may obtain the initial capability of the terminal device from the core network device, and configure the terminal device based on the initial capability of the terminal device. However, in the RRC connected mode, if the capability of the terminal device changes, the terminal device needs to be disconnected from the RRC connected mode, and enters the RRC idle mode, and then indicates, to the core network device in the registration process, that the capability of the terminal device changes, and reports a changed capability of the terminal device. This causes transmission interruption, and causes poor transmission performance.

In Embodiment 2, a terminal device may register with a core network device in an RRC idle mode. In a registration process, the terminal device may report a capability of the terminal device to an access network device and store the capability in the core network device. The capability stored in the core network device may be referred to as an "initial capability of the terminal device". Then, when the terminal device enters an RRC connected mode from the RRC idle mode to access the access network device, the access network device may obtain the initial capability of the terminal device from the core network device, and configure the terminal device based on the initial capability of the terminal device. In the RRC connected mode, if the capability of the terminal device changes, the terminal device may report the changed capability of the terminal device to the access network device, and the access network device may reconfigure the terminal device based on the reported changed capability of the terminal device. This can avoid a case in which the terminal device disconnects an RRC connection to enter the RRC idle mode, thereby avoiding transmission interruption, and improving transmission performance. However, in this embodiment, if the access network device configures the terminal device based on the initial capability of the terminal device, a configuration failure may be caused because the capability of the terminal device changes. Therefore, the terminal device may continue to disconnect the RRC connection according to the procedure in Embodiment 1, enter the RRC idle mode to indicate, to the core network device in the registration process, that the capability of the terminal device changes, and report the changed capability of the terminal device. Consequently, transmission is still interrupted, and transmission performance is poor.

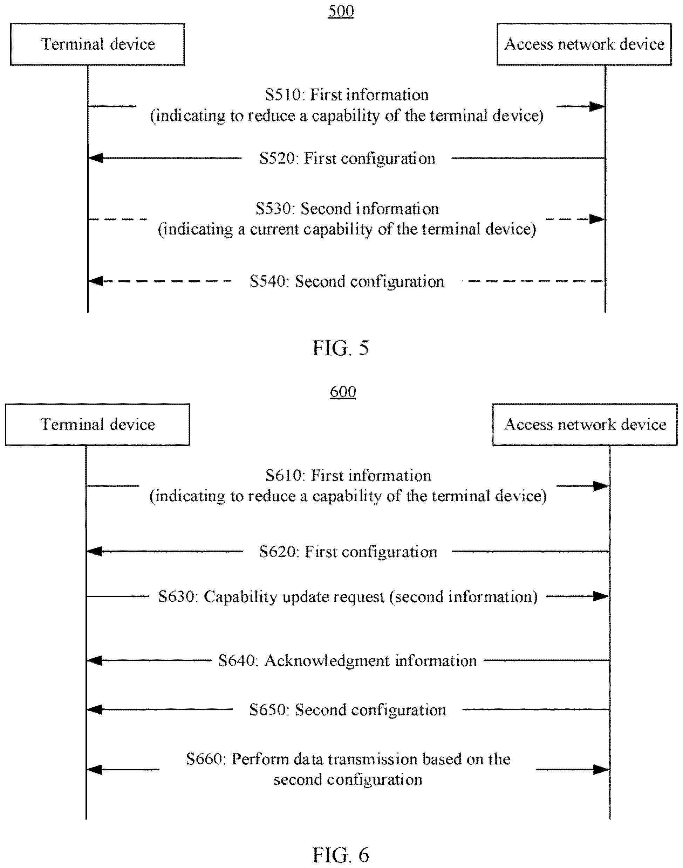

For the foregoing problem, in this embodiment of this application, the terminal device may send first information to the access network device, where the first information indicates to reduce a capability of the terminal device. The access network device may send a first configuration to the terminal device based on a first capability, and the first capability is a reduced capability of the terminal device. This avoids a case in which the terminal device needs to disconnect the RRC connection and report the capability of the terminal device again when the access network device configures the capability that exceeds the capability of the terminal device for the terminal device, to improve transmission performance. The following describes a configuration method 500 in this embodiment of this application with reference to FIG. 5. As shown in FIG. 5, the method 500 includes the following steps.

S510: A terminal device sends first information to an access network device, and the access network device receives the first information from the terminal device, where the first information indicate to reduce a capability of the terminal device.

Alternatively, the first information is used to request to reduce the capability of the terminal device. Alternatively, the first information is used to request to reduce an initial capability of the terminal device.

Alternatively, the first information is used to request to update the capability of the terminal device. Alternatively, the first information is used to request that an initial capability of the terminal device needs to be updated to a current capability of the terminal device.

Alternatively, the first information is used to request to use a current capability of the terminal device. Alternatively, the first information is used to request to use a current capability of the terminal device, and not to use an initial capability of the terminal device.

Alternatively, the first information is used to request to use a temporary capability of the terminal device. Alternatively, the first information is used to request to use a temporary capability of the terminal device, and not to use an initial capability of the terminal device.

Alternatively, the first information indicates that a current capability of the terminal device is reduced, that is, the current capability of the terminal device is reduced compared with an initial capability of the terminal device.

Alternatively, the first information indicates that a currently used capability needs to be changed.

It should be understood that the current capability of the terminal device is a capability currently supported by the terminal device. The capability currently used by the terminal device is a capability used in a process in which the terminal device currently communicates with the access network device, and the capability currently used by the terminal device may be lower than the initial capability of the terminal device.

Optionally, the terminal device may send a second capability to a core network device according to Embodiment 1. When the terminal device accesses the access network device, the terminal device may obtain the second capability of the terminal device from the core network device.

Optionally, before S510, the method further includes: The terminal device determines that a current capability of the terminal device is lower than a second capability, that is, the second capability is an initial capability of the terminal device. When the terminal device determines that the current capability of the terminal device is lower than the second capability, the terminal device may perform S510. For example, in a dual-card scenario, a card 1 and a card 2 are installed on a mobile phone. The card 1 is the terminal device in the method 500. The card 2 is in an RRC idle mode, and the card 1 is in an RRC connected mode. The card 1 uses all capabilities of the mobile phone, that is, all the capabilities of the mobile phone may be a second capability of the card 1. After the card 2 enters an RRC connected mode from the RRC idle mode, the card 2 also needs to use some capabilities of the mobile phone. In this case, a capability that is of the mobile phone and that is used by the card 1 is changed from all the capabilities to some capabilities of the mobile phone. For example, before the card 2 enters the RRC connected mode, the card 1 uses all four antennas of the mobile phone. After the card 2 enters the RRC connected mode, the card 1 can use only two antennas of the mobile phone, and the card 2 uses remaining two antennas of the mobile phone. Therefore, the capability used by the card 1 changes from the four antennas (the second capability) to the two antennas. Therefore, the card 1 needs to perform S510 to indicate to reduce the capability of the card 1 and indicate to reduce the capability of card 1 to be lower than the four antennas.

Optionally, S510 includes: The terminal device sends the RRC setup complete message to the access network device in S330 shown in FIG. 3, where the RRC setup complete message may include the first information.

Optionally, S510 includes: The terminal device sends the RRC resume request message to the access network device in S410 shown in FIG. 4, where the RRC resume request message may include the first information.

Optionally, S510 includes: The terminal device sends the RRC resume complete message to the access network device in S430 shown in FIG. 4, where the RRC resume complete message may include the first information.

Optionally, before S510, the access network device may broadcast a system message, where the system message includes third information, and the third information indicates that the terminal device is allowed to send the first information. In this way, after the terminal device obtains the third information in the system message, when the terminal device determines that the current capability is lower than the initial capability of the terminal device, the terminal device may perform S510. In other words, the terminal device sends the first information only when the access network device allows the terminal device to send the first information.

Alternatively, the third information may indicate that the terminal device is allowed to send an indication for reducing the capability of the terminal device. When the third information indicates that the access network device allows the terminal device to send the indication for reducing the capability of the terminal device, the terminal device may perform S510.

Alternatively, the third information may indicate whether the access network device supports a capability update mechanism. When the third information indicates that the access network device supports the capability update mechanism, the terminal device may perform S510.

Alternatively, the third information may indicate whether the access network device enables a capability update mechanism. When the third information indicates that the access network device enables the capability update mechanism, the terminal device may perform S510.

Alternatively, the third information may indicate whether the terminal device is allowed to use a current capability or a temporary capability. When the third information indicates that the terminal device is allowed to use the current capability or the temporary capability, the terminal device may perform S510.

Alternatively, the third information may indicate whether the terminal device is allowed to reduce a capability. When the third information indicates that the terminal device is allowed to reduce the capability of the terminal device, the terminal device may perform S510.

S520: The access network device sends a first configuration to the terminal device, and the terminal device receives the first configuration from the access network device, where a capability that is the terminal device and that corresponds to the first configuration is lower than the second capability of the terminal device.

Optionally, the second capability is a capability that is of the terminal device and that is stored in a core network device. The first capability is a capability that is of the terminal device and that is stored in the access network device. If the access network device of the terminal device changes, and a source access network device changes to a target access network device, a capability that is of the terminal device and that is stored by the source access network device needs to be released, and the terminal device needs to report the first capability to the target access network device again. However, in a process in which the access network device of the terminal device changes, the second capability stored by the core network device is not deleted. In other words, for different access network devices, the second capability does not change, but the first capability may change, and certainly may not change. In other words, the second capability may be an inherent capability of the terminal device, and the first capability may be a changed capability of the terminal device compared with the inherent capability.

Optionally, the second capability is the initial capability of the terminal device. The first capability is a temporary capability of the terminal device, or the first capability is a current capability of the terminal device.

Optionally, if the terminal device sends the RRC setup complete message to the access network device in S330 shown in FIG. 3, where the RRC setup complete message may include the first information, the access network device may send a 1^{st} RRC reconfiguration message to the terminal device after S330. The 1^{st} RRC reconfiguration message includes the first configuration. The 1^{st} RRC reconfiguration message herein may be a second RRC reconfiguration message.

Optionally, if the terminal device sends the RRC resume request message to the access network device in S410 shown in FIG. 4, where the RRC resume request message may include the first information, the access network device may send the RRC resume message to the terminal device in S420, where the RRC resume message may include the first configuration.

Optionally, if the terminal device sends the RRC resume complete message to the access network device in S430 shown in FIG. 4, where the RRC resume complete message may include the first information, the access network device may send a 1^{st} RRC reconfiguration message to the terminal device after S430. The 1^{st} RRC reconfiguration message may include the first configuration. The 1^{st} RRC reconfiguration message herein may be a first RRC reconfiguration message.

Optionally, the first capability that is of the terminal device and that corresponds to the first configuration includes allowing the terminal device to send the current capability. In this way, after S520, the method 500 may further include:

S530: The terminal device sends second information to the access network device, and the access network device receives the second information, where the second information indicates the current capability of the terminal device.

Optionally, the current capability of the terminal device may include a capability related to a single carrier of the terminal device and/or a capability related to a primary cell in which the terminal device is currently located. In other words, the terminal device indicates, to the access network device, the capability related to the single carrier of the terminal device and/or the capability related to the primary cell in which the terminal device is currently located, and does not indicate a capability unrelated to the single carrier and the primary cell, thereby reducing signaling overheads.

Optionally, the capability related to the single carrier of the terminal device may include a quantity of single carriers supported by the terminal device and/or a single carrier supported by the terminal device.

Optionally, the capability related to the primary cell in which the terminal device is currently located may include CA capabilities and/or DC capabilities of the primary cell in which the terminal device is currently located and another cell. Optionally, the CA capability of the primary cell in which the terminal device is currently located and the another cell may include: specific cells that form an aggregated carrier with the primary cell in which the terminal device is currently located. Optionally, the DC capability of the primary cell in which the terminal device is currently located and the another cell may include: specific cells that form dual connectivity with the primary cell in which the terminal device is currently located.

For example, as shown in Table 1, B in Table 1 indicates a band (band), Bx or Bx+By indicates a band combination, that is, Bx indicates a band combination including one band Bx, and Bx+By indicates a band combination including Bx and By. In Table 1, a band of the primary cell in which the terminal device is currently located is B1, capabilities related to B1 of the primary cell are {B1+B2} and {B 1+B3 }, and single-carrier bands supported by the terminal device are {B 1 }, {B2}, and {B3}. The current capability of the terminal device is less than the initial capability by {B2+B3} and {B1+B2+B3}. {B2+B3} is irrelevant to both the single-carrier capability supported by the terminal device and the primary cell. Therefore, the second information sent by the terminal device to the access network device may not indicate {B2+B3 }. {B 1+B2+B3} cannot be supported due to a limitation to the current capability of the terminal device, and therefore the second information sent by the terminal device to the access network device may not indicate {B1+B2+B3}. In this way, the current capability that is of the terminal device and that is indicated by the second information sent by the terminal device to the access network device is less than the initial capability of the terminal device by {B2+B3} and {B1+B2+B3}. This can reduce signaling overheads.

**Table 1**

| Initial capability of the terminal device | Current capability of the terminal device |
|---|---|
| {B1}, {B2}, {B3}, {B1+B2}, {B1+B3}, **{B2+B3}, {B1+B2+B3}** | {B1}, {B2}, {B3}, {B1+B2}, {B1+B3} |

The following describes how the second information indicates the current capability of the terminal device in two cases.

Case 1: The second information sent by the terminal device may include information about a band combination currently supported by the terminal device and/or information about a feature set corresponding to the currently supported band combination. The information about a band combination currently supported by the terminal device and/or the information about a feature set corresponding to the currently supported band combination indicate/indicates the current capability of the terminal device.

Optionally, the information about a band combination currently supported by the terminal device includes a correspondence between the band combination currently supported by the terminal device and an index of the currently supported band combination. The information about a feature set corresponding to the currently supported band combination includes a correspondence between the feature set corresponding to the currently supported band combination and an index of the feature set corresponding to the currently supported band combination.

Optionally, the information about a band combination currently supported by the terminal device may indicate the band combination currently supported by the terminal device. In other words, the information about a band combination currently supported by the terminal device may include the band combination currently supported by the terminal device, may include the index of the band combination currently supported by the terminal device, or may not include any explicit indication of the currently supported band combination and may be implicitly indicated by indicating a ranking of the band combination currently supported by the terminal device in a band combination list of the initial capability.

Optionally, the information about a feature set corresponding to the band combination currently supported by the terminal device may indicate the feature set corresponding to the band combination currently supported by the terminal device. In other words, the information about a feature set corresponding to the band combination currently supported by the terminal device may include the feature set corresponding to the band combination currently supported by the terminal device, may include the index of the feature set corresponding to the band combination currently supported by the terminal device, or may not include any explicit indication of the feature set corresponding to the currently supported band combination and may be implicitly indicated by indicating a ranking of the feature set corresponding to the band combination currently supported by the terminal device in a feature set list corresponding to a band combination in the initial capability.

Optionally, the terminal device may support one or more band combinations, and one band combination and a feature set corresponding to the band combination may represent one capability of the terminal device. One band combination may correspond to one or more feature sets (feature set), and one feature set corresponds to an index of one feature set. In this way, an index of one band combination may correspond to an index of one or more feature sets.

For example, the second information may include information about {B1} and information about a feature set corresponding to {B1}, information about {B2} and information about a feature set corresponding to {B2}, information about {B3} and information about a feature set corresponding to {B3}, information about {B1+B2} and information about a feature set corresponding to {B1+B2}, and information about {B1+B3} and information about a feature set corresponding to {B1+B3}. The information about {B1} may include {B1} and an index of {B1}, and the information about a feature set corresponding to {B 1} may include the feature set corresponding to {B1} and an index of the feature set corresponding to {B1}. The information about {B2} may include {B2} and an index of {B2}, and the information about a feature set corresponding to {B2} may include the feature set corresponding to {B2} and an index of the feature set corresponding to {B2}. The information about {B3} may include {B3} and an index of {B3}, and the information about a feature set corresponding to {B3} may include the feature set corresponding to {B3} and an index of the feature set corresponding to {B3}. The information about {B1+B2} may include {B1+B2} and an index of {B1+B2}, and the information about a feature set corresponding to {B1+B2} may include the feature set corresponding to {B1+B2} and an index of the feature set corresponding to {B1+B2}. The information about {B1+B3} may include {B1+B3} and an index of {B1+B3}, and the information about a feature set corresponding to {B1+B3} may include the feature set corresponding to {B 1+B3 } and an index of the feature set corresponding to {B 1+B3 }.

Optionally, if the band combination currently supported by the terminal device is the same as a band combination included in the initial capability of the terminal device, and the feature set corresponding to the band combination currently supported by the terminal device is the same as a feature set corresponding to the band combination included in the initial capability of the terminal device, the second information may indicate information about a band combination, and does not indicate information about a feature set corresponding to the band combination. By default, the information that is about the feature set corresponding to the band combination and that is not indicated is the same as information about a feature set of the band combination in the initial capability of the terminal device. This can reduce signaling overheads.

Optionally, the initial capability of the terminal device is stored in the core network device, and information about a band combination initially supported by the terminal device and information about a feature set corresponding to the band combination initially supported by the terminal device indicate the initial capability of the terminal device. Optionally, the information about a band combination initially supported by the terminal device includes the band combination initially supported by the terminal device and an index of the band combination initially supported by the terminal device, and the information about a feature set corresponding to the band combination initially supported by the terminal device includes information about a feature set corresponding to the band combination initially supported by the terminal device and an index of the feature set corresponding to the band combination initially supported by the terminal device. Optionally, the band combination initially supported by the terminal device may form the band combination list of the initial capability.

With reference to Table 1, for example, {B2} included in the current capability of the terminal device is the same as {B2} included in the initial capability, and the feature set of {B2} included in the current capability is the same as the feature set of {B2} included in the initial capability. {B3} included in the current capability of the terminal device is the same as {B3} included in the initial capability, and the feature set of {B3} included in the current capability is the same as the feature set of {B3} included in the initial capability. Therefore, the second information may include the information about {B1} and the information about a feature set of {B1}, {B2} (or the index of {B2}), {B3} (or the index of tB3 1), the information about {B1+B2}, the information about a feature set corresponding to {B1+B2}, the information about {B1+B3}, and the information about a feature set corresponding to {B1+B3}. When receiving the second information, the access network device determines that the feature set of {B2} included in the current capability is the same as the feature set of {B2} included in the initial capability, and the feature set of {B3 } included in the current capability of the terminal device is the same as the feature set of {B3} included in the initial capability. Therefore, the access network device may determine the feature set corresponding to {B2} in the initial capability as the feature set corresponding to {B2} in the current capability of the terminal device, and determine the feature set corresponding to {B3} in the initial capability as the feature set corresponding to {B3} in the current capability of the terminal device. This avoids a case in which the second information further includes the information about a feature set corresponding to {B2} and the information about a feature set corresponding to {B3}, thereby saving overheads.

Optionally, if a band combination currently supported by the terminal device is the same as a band combination included in the initial capability of the terminal device, and information about a feature set corresponding to the band combination currently supported by the terminal device is the same as information about a feature set corresponding to the band combination included in the initial capability of the terminal device, the second information may include the band combination (or an index of the band combination) and a first information bit, and the first information bit indicates that the information about a feature set corresponding to the band combination is the same as the information about a feature set of the band combination in the initial capability of the terminal device. In this way, the second information may not include the information about a feature set corresponding to the band combination. This can reduce signaling overheads. For example, a length of the first information bit may be 1.

Case 2: The second information includes information about a changed band combination and/or information about a feature set corresponding to the changed band combination, and the changed band combination is a band combination that is changed by comparing a band combination currently supported by the terminal device and a band combination corresponding to an initial capability of the terminal device.

Optionally, the changed band combination may be the band combination that is changed by comparing the band combination currently supported by the terminal device and the band combination corresponding to the initial capability of the terminal device. Alternatively, the band combination currently supported by the terminal device and the band combination corresponding to the initial capability of the terminal device are the same, but feature sets corresponding to the band combinations are different. In other words, for the changed band combination, the band combination may change, or the band combination may not change but the feature set corresponding to the band combination changes.

Optionally, the information about a changed band combination includes a correspondence between the changed band combination and an index of the changed band combination. Optionally, the information about a feature set corresponding to the changed band combination includes a correspondence between the feature set corresponding to the changed band combination and an index of the feature set corresponding to the changed band combination.

Optionally, the information about a changed band combination may also indicate the changed band combination. In other words, the information about a changed band combination may include the changed band combination, or may include the index of the changed band combination.

Optionally, the terminal device may determine the band combination that is changed by comparing the band combination currently supported by the terminal device and the band combination that is initially supported and that is included in the initial capability of the terminal device. The second information may include the information about a changed band combination and/or the information about a feature set corresponding to the changed band combination. In this way, the access network device may determine, based on the information about a changed band combination and the information about a band combination included in the initial capability of the terminal device, the information about a band combination currently supported by the terminal device. The access network device may determine, based on the information about a feature set of the changed band combination and information about a feature set of the band combination included in the initial capability of the terminal device, information about a feature set corresponding to a band combination included in the current capability of the terminal device. In this case, if the information about a band combination in the current capability of the terminal device is the same as the information about a band combination in the initial capability of the terminal device, and the information about the corresponding feature sets is also the same, the second information may not include the information about the same band combinations and the information about the feature sets corresponding to the same band combinations. This can reduce signaling overheads.

Optionally, the changed band combination may include at least one of a band combination that is no longer supported compared with the band combination in the initial capability, a band combination that is newly added compared with the band combination in the initial capability, and a band combination that is changed compared with the feature set corresponding to the band combination in the initial capability.

Optionally, the second information may further include indication information indicating the newly added band combination. In this way, the access network device determines, based on the indication information, a band combination that is in the changed band combination and that is the newly added band combination of the terminal device. Optionally, the second information may not include indication information indicating the newly added band combination, and the second information may include the newly added band combination and an index of the newly added band combination, and a feature set corresponding to the newly added band combination and an index of the feature set corresponding to the newly added band combination. This can implicitly indicate that the band combination is the newly added band combination.

Optionally, the second information may further include indication information of a band combination that is changed compared with the feature set corresponding to the band combination in the initial capability. In this way, the access network device determines, based on the indication information, a feature set that is of a band combination in the changed band combination and that changes. Optionally, the second information may not include indication information of a band combination that is changed compared with the feature set corresponding to the band combination in the initial capability, and the second information may include the changed band combination and an index of the changed band combination, and a feature set corresponding to the newly added combination and an index of the feature set corresponding to the newly added combination. This can implicitly indicate that the band combination is the band combination of which the feature set is changed.

Optionally, the second information may further include indication information indicating the band combination that is no longer supported. In this way, the access network device may determine, based on the indication information, a band combination that is in the changed band combination and that is no longer supported by the terminal device. Optionally, the second information may not include indication information indicating that the band combination is no longer supported, and the second information includes an index of the band combination that is no longer supported, but does not include an index of a feature set corresponding to the band combination that is no longer supported. This can implicitly indicate that the terminal device no longer supports the band combination corresponding to the index.

The following provides descriptions with reference to Table 2. BC in Table 2 is an abbreviation of a band combination (band combination), an index of {BC1} is 1, an index of {BC2} is 2, and an index of {BC3} is 3. The current capability of the terminal device is shown in the right column of Table 2, and the initial capability of the terminal device is shown in the left column of Table 2. Therefore, the second information includes {BC2} (or the index 2 of {BC2}) and information about a feature set of {BC2}, {BC3 } (or the index 3 of {BC3 }), and information about {BC4} and information about a feature set of {BC4}. In this way, the access network device determines, based on the initial capability of the terminal device and the second information, that the capability currently supported by the terminal device includes {BC1}, {BC2}, and {BC4}, and a feature set corresponding to {BC1} is the same as a feature set of {BC1} included in the initial capability of the terminal device. The information about a feature set of {BC2} is included in the second information, and the information about a feature set of {BC4} is also included in the second information.

**Table 2**

| Initial capability of the terminal device | Current capability of the terminal device |
|---|---|
| {BC1}, {BC2}, {BC3} | {BC1} (unchanged compared with the feature set of BC1 in the initial capability) |
| | {BC2} (changed compared with the feature set of BC2 in the initial capability) |
| | {BC3} (not supported compared with BC3 in the initial capability) |
| | {BC4} (a capability added compared with the initial capability) |

Optionally, the foregoing described index of the band combination may be replaced with an identifier of the band combination, and the index of the feature set may be replaced with an identifier of the feature set.

Optionally, the feature set of the band combination may include but is not limited to one or more of the following: a channel sounding reference signal (sounding reference signal, SRS) capability, a supplementary uplink (supplementary uplink, SUL) capability, a power class (power class), a bandwidth size of a band or a carrier, a quantity of antennas of the band or the carrier, and a quantity of multiple-input multiple-output (multiple-input multiple-output, MIMO) layers of the band or the carrier.

Optionally, the access network device sends first filtering information to the terminal device, and the terminal device may receive the first filtering information sent by the access network device. S530 includes: The terminal device sends the second information to the access network device based on the first filtering information, where the current capability that is of the terminal device and that is indicated by the second information is a capability related to the first filtering information. Optionally, the terminal device may reserve a part indicated by the first filtering information in the initial capability of the terminal device, and filter out a part that is not indicated by the first filtering information in the initial capability of the terminal device. In this way, the second information may indicate a reserved part of the capability of the terminal device. For example, the first filtering information indicates a first band and a second band. The terminal device may reserve a capability related to the first band and the second band, and filter out a capability unrelated to the first band and the second band.

For example, as shown in Table 3, the first filtering information may indicate B1 and B2. The terminal device reserves capabilities {B1}, {B1+B2}, and {B1+B3} that are related to B1 and that are in the initial capability of the terminal device and capabilities {B2} and {B2+B3 } that are related to B2 and that are in the initial capability of the terminal device, and filters out a capability {B3} that is unrelated to B 1 and B2 and that is in the initial capability of the terminal device. {B1+B2+B3} cannot be supported due to a limitation to the current capability of the terminal device, and therefore the second information sent by the terminal device to the access network device may not indicate {B1+B2+B3}. Therefore, the current capability of the terminal device is less than the initial capability by {B3} and {B1+B2+B3}. Therefore, the second information sent by the terminal device to the access network device may not indicate {B3} and {B1+B2+B3}. This can reduce signaling overheads.

**Table 3**

| Initial capability of the terminal device | Current capability of the terminal device |
|---|---|
| {B1}, {B2}, **{B3},** {B1+B2}, {B1+B3}, {B2+B3}, **{B1+B2+B3}** | {B1}, {B2}, {B1+B2}, {B1+B3}, {B2+B3} |

Optionally, the access network device may determine the first filtering information based on an implementation of the access network device, or the access network device may determine the first filtering information based on the initial capability of the terminal device. In other words, the access network device may determine, based on the initial capability of the terminal device, a capability that needs to be reserved by the terminal device, and indicate, to the terminal device based on the first filtering information, the capability that needs to be reserved.

Optionally, after determining the current capability of the terminal device based on the first filtering information, the terminal device may send the first filtering information and the second information to the access network device, to indicate that the current capability that is of the terminal device and that is indicated by the second information is obtained based on the first filtering information.

After the terminal device determines the current capability of the terminal device based on the first filtering information, for a manner of indicating by the second information, refer to the descriptions in the foregoing case 1 and case 2. To avoid repetition, details are not described again.

Optionally, the first configuration in S520 may include the first filtering information. In other words, after receiving the first information, the access network device determines, based on the first information, that the capability of the terminal device needs to be reduced, and the first configuration that may be sent by the access network device to the terminal device may include the first filtering information. In this way, the terminal device may determine the current capability of the terminal device based on the first filtering information, thereby reducing signaling.

S540: The access network device sends a second configuration to the terminal device, and the terminal device receives the second configuration, where the second configuration is determined based on the current capability of the terminal device.

Optionally, a third capability that is of the terminal device and that corresponds to the second configuration is determined based on the current capability of the terminal device.

Optionally, the third capability of the terminal device is lower than the second capability of the terminal device.

Optionally, a relationship between the third capability of the terminal device and the first capability of the terminal device is not limited. The third capability of the terminal device may be higher than the first capability of the terminal device, or may be lower than the first capability of the terminal device.

For example, the second information sent by the terminal device indicates that a maximum bandwidth currently supported by the terminal device is 100M, and the access network device may determine, based on the maximum bandwidth 100M supported by the terminal device, that a bandwidth used by the terminal device is 80M. In this case, the second configuration sent by the access network device to the terminal device may configure the terminal device to use the bandwidth of 80M. In other words, the second configuration is determined based on the maximum bandwidth 100M supported by the terminal device.

S530 and S540 may be performed when the terminal device is in an RRC connected mode.

In the method 500, after determining that the current capability of the terminal device is lower than the initial capability of the terminal device, the terminal device may send the first information to the access network device, where the first information indicates to reduce the capability of the terminal device. In this way, when sending the first configuration to the terminal device, the access network device may perform configuration based on the capability lower than the initial capability. This avoids a case in which the configured capability exceeds the current capability of the terminal device to help improve a success rate of the configuration, avoids a case in which the terminal device needs to report the current capability of the terminal device when entering an RRC idle mode, and avoids transmission interruption, thereby improving transmission performance.

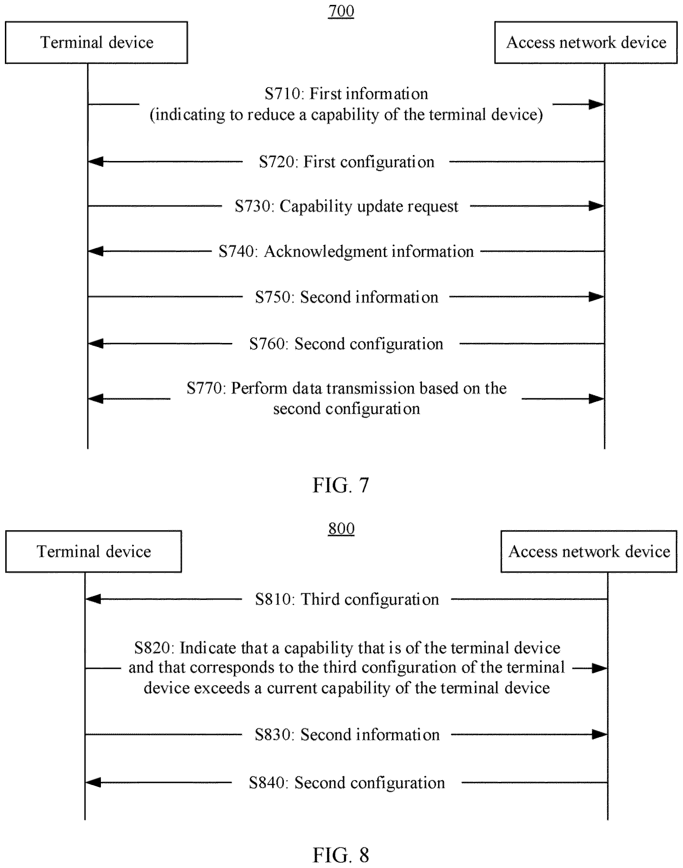

The following describes two possible configuration methods in the method 500 with reference to FIG. 6 and FIG. 7. As shown in FIG. 6, a method 600 includes the following steps.

S610: A terminal device sends first information to an access network device, and the access network device receives the first information.

For S610, refer to the descriptions of S510.

S620: The access network device sends a first configuration to the terminal device, and the terminal device receives the first configuration.

Optionally, the first configuration includes allowing the terminal device to send a current capability. In this way, the terminal device may perform S630.

Optionally, if the access network device sends first filtering information to the terminal device in the method 500, the first configuration in S620 may include the first filtering information.

S630: The terminal device sends a capability update request to the access network device, where the capability update request includes second information.

The capability update request is used to request to update a capability of the terminal device, that is, is used to request to use the current capability of the terminal device, that is, is used to request to use a capability indicated by the second information. Optionally, the "capability update request" may also be referred to as another name such as a "capability update indication".

Optionally, the terminal device reports the capability update request to the access network device based on the first configuration. In other words, the terminal device sends the capability update request to the access network device based on the first configuration.

Optionally, if the first configuration includes the first filtering information, the capability update request may include the second information and the first filtering information, where the first filtering information corresponds to the second information. The first filtering information included in the capability update request indicates that the second information is obtained based on the first filtering information.

S640: The access network device sends acknowledgment information to the terminal device, to indicate that the terminal device is acknowledged to use the current capability of the terminal device, or indicate that the terminal device is allowed to use the current capability of the terminal device.

S650: The access network device sends a second configuration to the terminal device based on the current capability of the terminal device, where the second configuration is determined based on the current capability of the terminal device.

Optionally, the method 600 may not include S640. If the terminal device receives the second configuration, it indicates that the access network device receives the current capability.

S660: The terminal device performs data transmission with the access network device based on the second configuration.

In the method 600, after the terminal device sends the first information, the access network device may send the first configuration to the terminal device. The terminal device sends the capability update request to the access network device based on the first configuration, to request to update the capability of the terminal device. The capability update request includes the second information indicating the current capability of the terminal device. In other words, the terminal device requests to update the capability of the terminal device to the current capability that is of the terminal device and that is indicated by the second information. In this way, the access network device may send the second configuration to the terminal device based on the second information. In other words, the terminal device may request, based on the first configuration sent by the access network device, the access network device to update the current capability of the terminal device.

A configuration method 700 shown in FIG. 7 includes the following steps.

S710: A terminal device sends first information to an access network device, and the access network device receives the first information.

For S710, refer to the descriptions of S510.

S720: The access network device sends a first configuration to the terminal device, and the terminal device receives the first configuration.

Optionally, the first configuration includes allowing the terminal device to send a current capability. In this way, the terminal device may perform S730.

Optionally, if the access network device sends first filtering information to the terminal device in the method 500, the first configuration in S720 may include the first filtering information.

S730: The terminal device sends a capability update request to the access network device, and the access network device receives the capability update request, where the capability update request is used to request to update a capability of the terminal device.

Optionally, the "capability update request" may also be referred to as another name such as a "capability update indication".

S740: The access network device sends acknowledgment information to the terminal device, to indicate that the terminal device is acknowledged or allowed to report an updated capability of the terminal device.

S750: The terminal device sends second information to the access network device, and the access network device receives the second information, where the second information indicates the current capability of the terminal device.

Optionally, if the first configuration in S720 includes the first filtering information, in S750, the terminal device may also send the first filtering information when sending the second information to the access network device. The second information corresponds to the first filtering information, to indicate that the second information is obtained based on the first filtering information.

Optionally, in a scenario in which the terminal device switches the access network device, for example, the access network device in the method 700 is a source access network device. When the access network device of the terminal device is handed over from the source access network device to a target access network device, the source access network device may forward the received second information and the first filtering information to the target access network device, and the target access network device may also determine second filtering information based on an implementation of the target access network device. If the target access network device determines that the second filtering information is the same as the first filtering information from the source access network device, the terminal device does not need to report the current capability of the terminal device to the target access network device based on the second filtering information, and the target access network device directly stores the current capability that is of the terminal device and that is indicated by the second information from the source access network device, and performs configuration based on the current capability of the terminal device. If the target access network device determines that the second filtering information is different from the first filtering information from the source access network device, the target access network device determines that the capability that is of the terminal device and that is indicated by the second information is not a capability that is of the terminal device and that is expected by the target access network device. Therefore, the target access network device may send the acknowledgment information to the terminal device, and the acknowledgment information carries the second filtering information. The terminal device determines, based on the second filtering information, a capability currently supported by the terminal device, and reports the current capability of the terminal device to the target access network device. This avoids a case in which the terminal device needs to initiate the capability update request to request the target access network device to report the current capability of the terminal device, thereby reducing signaling overheads. Another step of the target access network device is the same as another step of the source access network device. To avoid repetition, details are not described.

S760: The access network device sends a second configuration to the terminal device based on the current capability of the terminal device, where the second configuration is determined based on the current capability of the terminal device.

S770: The terminal device performs data transmission with the access network device based on the second configuration.

In the method 700, after the terminal device sends the first information, the access network device may send the first configuration to the terminal device. The terminal device sends the capability update request to the access network device based on the first configuration, to request to update the capability of the terminal device. If the access network device determines that the capability update request of the terminal device is allowed, the terminal device sends, to the terminal device, the second information indicating the current capability of the terminal device. In this way, the access network device may send the second configuration to the terminal device based on the second information. In other words, the terminal device may request, based on the first configuration sent by the access network device, the access network device to update the current capability of the terminal device.

The following describes a configuration method 800 provided in an embodiment of this application with reference to FIG. 8. As shown in FIG. 8, the method 800 includes the following steps.

S810: An access network device may send a third configuration to a terminal device, and the terminal device receives the third configuration sent by the access network device.

Optionally, a capability that is of the terminal device and that corresponds to the third configuration may be an initial capability of the terminal device.

Optionally, a capability that is of the terminal device and that corresponds to the third configuration may be a capability stored in a core network device.

Optionally, a capability that is of the terminal device and that corresponds to the third configuration may be a capability stored in the access network device.

Optionally, a capability that is of the terminal device and that corresponds to the third configuration may be a temporary capability of the terminal device.

Optionally, the third configuration may indicate that the terminal device is allowed to send a current capability.

Optionally, the third configuration may include first filtering information.

Optionally, a third RRC reconfiguration message that is first sent by the access network device to the terminal device after receiving the RRC setup complete message shown in FIG. 3 may include the third configuration.

Optionally, the access network device may send the third configuration to the terminal device in the RRC resume message in S420 in FIG. 4.

Optionally, a 1^{st} RRC reconfiguration message that is sent by the access network device to the terminal device after receiving the RRC resume complete message in FIG. 4 may include the third configuration.

Optionally, before S810, the access network device may broadcast a system message, where the system message includes third information, and the third information indicates that the terminal device is allowed to send the current capability. In this way, after obtaining the third information in the system message, the terminal device may perform S830 after performing S820. In other words, the terminal device sends the second information to indicate the current capability of the terminal device only when the access network device allows the terminal device to send.

Alternatively, the third information may indicate whether the access network device supports a capability update mechanism. When the third information indicates that the access network device supports the capability update mechanism, the terminal device may perform S830.

Alternatively, the third information may indicate whether the access network device enables a capability update mechanism. When the third information indicates that the access network device enables the capability update mechanism, the terminal device may perform S830.

Alternatively, the third information may indicate whether the terminal device is allowed to use a current capability or a temporary capability. When the third information indicates that the terminal device is allowed to use the current capability or the temporary capability, the terminal device may perform S830.

Alternatively, the third information may indicate whether the terminal device is allowed to report a current capability or a temporary capability of the terminal device. When the third information indicates that the terminal device is allowed to report the current capability or the temporary capability of the terminal device, the terminal device may perform S830.

S820: The terminal device indicates, to the access network device, that the capability that is of the terminal device and that corresponds to the third configuration of the terminal device exceeds the current capability of the terminal device.

Optionally, when determining that the current capability of the terminal device is lower than the capability that is of the terminal device and that corresponds to the third configuration, the terminal device performs S820.

Optionally, when the access network device sends the third configuration through the RRC reconfiguration message, when the terminal device determines that the current capability of the terminal device is lower than the capability that is of the terminal device and that corresponds to the third configuration, the terminal device does not consider that RRC reconfiguration fails, and the terminal device continues to stay in a current RRC connected mode instead of triggering an RRC re-establishment process, and indicates, to the access network device, that the capability that is of the terminal device and that corresponds to the third configuration of the terminal device exceeds the current capability of the terminal device. In this way, the terminal device can be prevented from performing the RRC re-establishment procedure.

Optionally, when the access network device sends the third configuration through the RRC resume message, when the terminal device determines that the current capability of the terminal device is lower than the capability that is of the terminal device and that corresponds to the third configuration, the terminal device does not consider that RRC resume fails, and the terminal device continues to send an RRC resume complete message to the access network device instead of triggering a process of performing an RRC resume setup request, and may indicate, to the access network device in the RRC resume complete message, that the capability that is of the terminal device and that corresponds to the third configuration of the terminal device exceeds the current capability of the terminal device. In this way, the terminal device can be prevented from performing an RRC resume procedure again.

For example, in a dual-card scenario, a card 1 and a card 2 are installed on a mobile phone. The card 1 is the terminal device in the method 800. The card 2 is in an RRC idle mode, and the card 1 is in an RRC connected mode. The access network device sends a third configuration to the card 1 based on all capabilities of the mobile phone. However, in this case, the card 2 enters an RRC connected mode, and the card 1 cannot use all the capabilities of the mobile phone, that is, all the capabilities of the mobile phone may be an initial capability of the card 1. After the card 2 enters the RRC connected mode from the RRC idle mode, the card 2 also needs to use some capabilities of the mobile phone, and a capability that is of the mobile phone and that is used by the card 1 need to be changed from all the capabilities to some capabilities. Therefore, the card 1 needs to indicate, to the access network device, that a capability corresponding to the third configuration exceeds a current capability of the card 1.

Optionally, S820 includes: The terminal device indicates, to the access network device based on the current capability, that the capability that is of the terminal device and that corresponds to the third configuration of the terminal device exceeds the current capability of the terminal device.

Optionally, that the terminal device indicates, to the access network device based on the current capability, that the capability that is of the terminal device and that corresponds to the third configuration of the terminal device exceeds the current capability of the terminal device may include: When keeping the current configuration unchanged, the terminal device indicates, to the access network device, that the capability that is of the terminal device and that corresponds to the third configuration of the terminal device exceeds the current capability of the terminal device.

Optionally, the current configuration of the terminal device may be a default configuration.

Optionally, the current configuration of the terminal device may be a related configuration in a broadcast message.

Optionally, that the terminal device indicates, to the access network device based on the current capability, that the capability that is of the terminal device and that corresponds to the third configuration of the terminal device exceeds the current capability of the terminal device may include: The terminal device indicates, to the access network device based on a capability-related configuration in the current configuration, that the capability that is of the terminal device and that corresponds to the third configuration of the terminal device exceeds the current capability of the terminal device.

Optionally, the terminal device may indicate, to the access network device in any one of the following manners, that the capability that is of the terminal device and that corresponds to the third configuration of the terminal device exceeds the current capability of the terminal device.

Manner 1: The terminal device may send a first message to the access network device, where the first message includes a first field, and an information bit carried in the first field indicates that the capability that is of the terminal device and that corresponds to the third configuration of the terminal device exceeds the current capability of the terminal device.

Optionally, the first message may be an RRC reconfiguration complete message corresponding to the RRC reconfiguration message, and the RRC reconfiguration complete message may include the first field.

Optionally, if the access network device sends the third configuration in the RRC resume message, the first message may be an RRC resume complete message, and the RRC resume complete message may include the first field.

Manner 2: The terminal device sends second information to the access network device, where the second information indicates the current capability of the terminal device.

Optionally, the RRC reconfiguration complete message corresponding to the RRC reconfiguration message may include the second information.

Optionally, if the access network device sends the third configuration in the RRC resume message, the RRC resume complete message may include the second information.

In other words, the terminal device implicitly indicates, to the access network device by sending the second information to the access network device, that the capability that is of the terminal device and that corresponds to the third configuration of the terminal device exceeds the current capability of the terminal device. In other words, after the access network device receives the current capability that is of the terminal device and that is indicated by the second information sent by the terminal device, the access network device determines that the capability that is of the terminal device and that corresponds to the third configuration exceeds the current capability of the terminal device.

For the current capability that is of the terminal device and that is indicated by the second information, refer to the descriptions of the method 500. To avoid repetition, details are not described.

Optionally, if the terminal device indicates, to the access network device in the manner 2, that the capability that is of the terminal device and that corresponds to the third configuration of the terminal device exceeds the current capability of the terminal device, the method 800 may not include S830, but may include S840.

Optionally, if the terminal device indicates, to the access network device in the manner 1, that the capability that is of the terminal device and that corresponds to the third configuration of the terminal device exceeds the current capability of the terminal device, optionally, the method 800 may include the following steps.

S830: The terminal device sends second information to the access network device, and the access network device receives the second information, where the second information indicates the current capability of the terminal device.

For descriptions of S830, refer to the descriptions of S530.

Optionally, if the capability that is of the terminal device and that corresponds to the third configuration includes allowing the terminal device to send the current capability, the terminal device may perform S830. Certainly, the terminal device may alternatively actively send the second information to the access network device without depending on the third configuration.

S840: The access network device sends a second configuration to the terminal device, and the terminal device receives the second configuration, where the second configuration is determined based on the current capability of the terminal device.

For descriptions of S840, refer to the descriptions of S540.

In the method 500, after the terminal device receives the third configuration, if the terminal device determines that the current capability of the terminal device is lower than the capability that is of the terminal device and that corresponds to the third configuration, it indicates that the terminal device cannot communicate with the access network device based on the capability that is of the terminal device and that corresponds to the third configuration. Therefore, the terminal device may indicate, to the access network device, that the capability that is of the terminal device and that corresponds to the third configuration of the terminal device exceeds the current capability of the terminal device. In this way, the access network device may learn that the capability currently used by the terminal device is not the capability corresponding to the third configuration, and the access network device does not communicate with the terminal device based on the third configuration, but continues to communicate with the terminal device based on an original configuration. This avoids a communication failure caused when the network device communicates with the terminal device based on the third configuration that exceeds the capability of the terminal device, thereby improving transmission reliability.

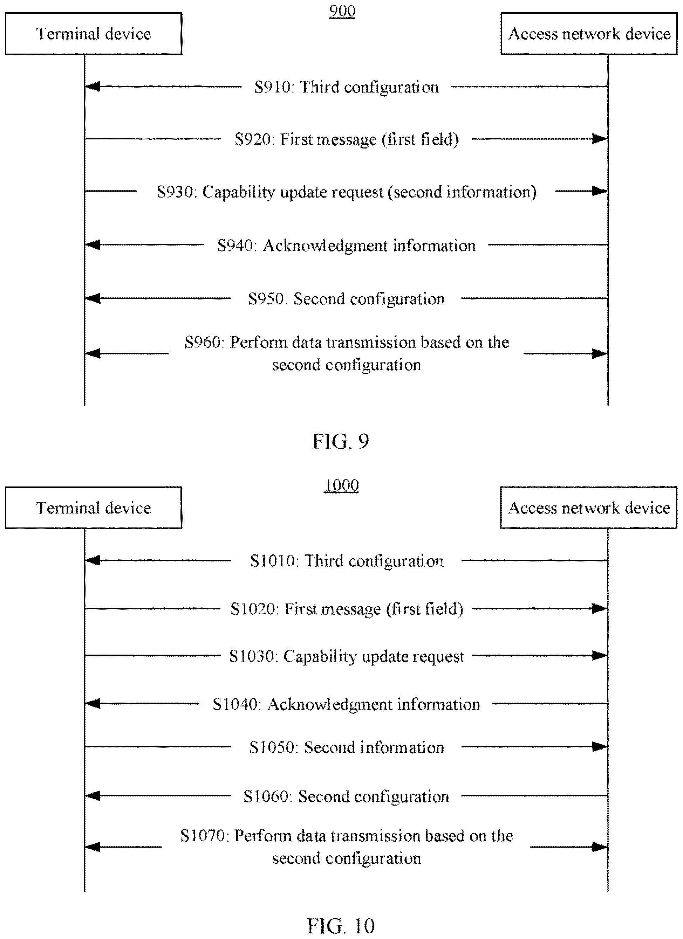

The following describes two possible configuration methods in the method 800 with reference to FIG. 9 and FIG. 10. As shown in FIG. 9, a method 900 includes the following steps.

S910: An access network device sends a third configuration to a terminal device, and the terminal device receives the third configuration.

For S910, refer to the descriptions of S810.

S920: The terminal device sends a first message to the access network device, where the first message includes a first field, and an information bit carried in the first field indicates that a capability that is of the terminal device and that corresponds to the third configuration of the terminal device exceeds a current capability of the terminal device.

S920 corresponds to the manner 1 of S820.

Optionally, S920 includes: The terminal device may send the first message to the access network device based on a configuration in a broadcast message.

S930: The terminal device may send a capability update request to the access network device, where the capability update request includes second information.

The capability update request is used to request to update a capability of the terminal device, that is, is used to request to use the current capability of the terminal device, that is, is used to request to use a capability indicated by the second information. Optionally, the "capability update request" may also be referred to as another name such as a "capability update indication".

Optionally, the terminal device reports the capability update request to the access network device based on the configuration in the broadcast message. In other words, the terminal device reports the capability update request to the access network device based on a default configuration.

Optionally, if the third configuration includes first filtering information, the capability update request may include the second information and the first filtering information, where the first filtering information corresponds to the second information. The first filtering information included in the capability update request indicates that the second information is obtained based on the first filtering information.

Optionally, if a first capability that is of the terminal device and that corresponds to the third configuration includes allowing the terminal device to send the current capability, the terminal device may perform S930.

S940: The access network device sends acknowledgment information to the terminal device, to indicate that the terminal device is acknowledged to use the current capability of the terminal device, or indicate that the terminal device is allowed to use the current capability of the terminal device.

S950: The access network device sends a second configuration to the terminal device based on the current capability of the terminal device, where the second configuration is determined based on the current capability of the terminal device.

Optionally, the method 900 may not include S940. If the terminal device receives the second configuration, it indicates that the access network device receives the current capability.

S960: The terminal device performs data transmission with the access network device based on the second configuration.

Optionally, the method 900 may not include S920. In this case, the second information in S930 may implicitly indicate that the capability that is of the terminal device and that corresponds to the third configuration of the terminal device exceeds the current capability of the terminal device. A scenario in which S920 is not included in the method 900 may correspond to the manner 2 in S820.

In the method 900, after the access network device sends the third configuration to the terminal device, if the current capability of the terminal device is lower than the capability corresponding to the third configuration, the terminal device sends the first message to the access network device. The information bit carried in the first field in the first message indicates that the capability that is of the terminal device and that corresponds to the third configuration of the terminal device exceeds the current capability of the terminal device. In addition, the terminal device sends the capability update request to the access network device, to request to update the capability of the terminal device. The capability update request includes the second information indicating the current capability of the terminal device. In other words, the terminal device requests to update the capability of the terminal device to the current capability that is of the terminal device and that is indicated by the second information. In this way, the access network device may send the second configuration to the terminal device based on the second information.

A configuration method 1000 shown in FIG. 10 includes the following steps.

S1010: An access network device sends a third configuration to a terminal device, and the terminal device receives the third configuration.

For S1010, refer to the descriptions of S810.

Optionally, the third configuration may include first filtering information.

S1020: The terminal device sends a first message to the access network device, where the first message includes a first field, and an information bit carried in the first field indicates that a capability that is of the terminal device and that corresponds to the third configuration of the terminal device exceeds a current capability of the terminal device.

S1020 corresponds to the manner 1 of S820.

Optionally, the terminal device may send the first message to the access network device based on a configuration in a broadcast message.

S1030: The terminal device sends a capability update request to the access network device, and the access network device receives the capability update request, where the capability update request is used to request to update a capability of the terminal device.

Optionally, the "capability update request" may also be referred to as another name such as a "capability update indication".

Optionally, the terminal device may simultaneously perform S1020 and S1030, or may separately perform S1020 and S1030. This is not limited in this embodiment of this application.

S1040: The access network device sends acknowledgment information to the terminal device, to indicate that the terminal device is acknowledged or allowed to report an updated capability of the terminal device.

S1050: The terminal device sends second information to the access network device, and the access network device receives the second information, where the second information indicates the current capability of the terminal device.

Optionally, if the third configuration in S1010 includes the first filtering information, in S1050, the terminal device also sends the first filtering information when sending the second information to the access network device. The second information corresponds to the first filtering information, to indicate that the second information is obtained based on the first filtering information.

Optionally, in a scenario in which the terminal device switches the access network device, for example, the access network device in the method 1000 is a source access network device. When the access network device of the terminal device is handed over from the source access network device to a target access network device, the source access network device may forward the received second information and the first filtering information to the target access network device, and the target access network device may also determine second filtering information based on an implementation of the target access network device. If the target access network device determines that the second filtering information is the same as the first filtering information from the source access network device, it indicates that the terminal device does not need to report the current capability of the terminal device to the target access network device based on the second filtering information, and the target access network device directly stores the current capability that is of the terminal device and that is indicated by the second information from the source access network device, and performs configuration based on the current capability of the terminal device. If the target access network device determines that the second filtering information is different from the first filtering information from the source access network device, the target access network device determines that the capability that is of the terminal device and that is indicated by the second information is not a capability that is of the terminal device and that is expected by the target access network device. Therefore, the target access network device may send the acknowledgment information to the terminal device, and the acknowledgment information carries the second filtering information. The terminal device determines, based on the second filtering information, a capability currently supported by the terminal device, and reports the current capability of the terminal device to the target access network device. This avoids a case in which the terminal device needs to initiate the capability update request to request the target access network device to report the current capability of the terminal device, thereby reducing signaling overheads. Another step of the target access network device is the same as another step of the source access network device. To avoid repetition, details are not described.

S1060: The access network device sends a second configuration to the terminal device based on the current capability of the terminal device, where the second configuration is determined based on the current capability of the terminal device.

S1070: The terminal device performs data transmission with the access network device based on the second configuration.

In the method 1000, after the access network device sends the third configuration to the terminal device, if the current capability of the terminal device is lower than the capability corresponding to the third configuration, the terminal device sends the first message to the access network device. The information bit carried in the first field in the first message indicates that the capability that is of the terminal device and that corresponds to the third configuration of the terminal device exceeds the current capability of the terminal device. In addition, the terminal device sends the capability update request to the access network device, to request to update the capability of the terminal device. If the access network device determines that the capability update request of the terminal device is allowed, the terminal device sends, to the terminal device, the second information indicating the current capability of the terminal device. In this way, the access network device may send the second configuration to the terminal device based on the second information.

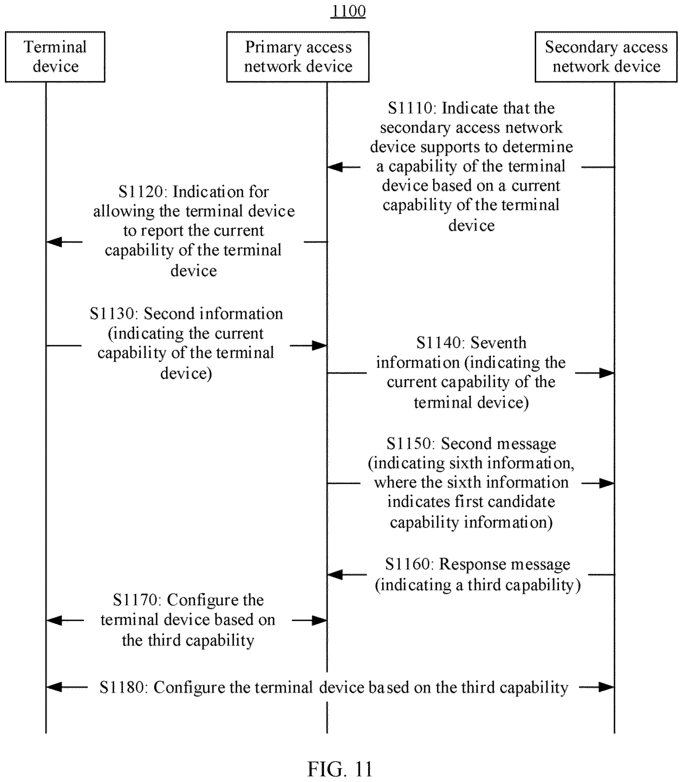

The foregoing method embodiment is applicable to the scenario shown in FIG. 1. In the scenario shown in FIG. 2, the access network device 121 and the access network device 122 each may determine a capability of the terminal device based on a current capability of the terminal device. The access network device 121 may be a primary access network device below, and the access network device 122 may be a secondary access network device below. The primary access network device and secondary access network device each may determine the capability of the terminal device based on the current capability of the terminal device. In this way, the primary access network device and the secondary access network device each may configure the terminal device based on the determined capability of the terminal device. The following describes a method 1100 with reference to FIG. 11. As shown in FIG. 11, the method 1100 includes the following steps.

S1110: A secondary access network device indicates, to a primary access network device, that the secondary access network device supports to determine, based on a current capability of a terminal device, a capability used to configure the terminal device, and the primary access network device learns that the secondary access network device supports to determine, based on the current capability of the terminal device, the capability used to configure the terminal device.

Optionally, the secondary access network device may indicate, to the primary access network device based on a secondary access network device addition message sent to the primary access network device, that the secondary access network device supports to determine, based on the current capability of the terminal device, the capability used to configure the terminal device.

Alternatively, the secondary access network device may indicate, to the primary access network device, that the secondary access network device enables a capability update mechanism, and the primary access network device learns that the secondary access network device enables the capability update mechanism.

Optionally, the secondary access network device may indicate, to the primary access network device based on any message sent to the primary access network device, whether the secondary access network device enables the capability update mechanism.

Optionally, the secondary access network device may indicate, to the primary access network device, whether the secondary access network device supports to determine, based on the current capability of the terminal device, the capability used to configure the terminal device. If the secondary access network device indicates that the secondary access network device does not support to determine, based on the current capability of the terminal device, the capability used to configure the terminal device, the method 1100 ends.

Alternatively, the secondary access network device may indicate, to the primary access network device, whether the secondary access network device enables the capability update mechanism. If the secondary access network device does not enable the capability update mechanism, the method 1100 ends.

Optionally, whether the secondary access network device enables the capability update mechanism may be replaced with whether the secondary access network device supports the capability update mechanism, or may be replaced with whether the secondary access network device supports to update the capability of the terminal device, or may be replaced with whether the secondary access network device supports to update an initial capability of the terminal device.

It should be noted that S1110 is an optional step. Alternatively, an operation, administration, and maintenance (operation, administration, maintenance, OAM) network element may configure or indicate, to the primary access network device, that the secondary access network device supports to determine, based on the current capability of the terminal device, the capability used to configure the terminal device. In this case, the secondary access network device does not need to be used to indicate to the primary access network device.

It may be understood that the determining the capability used to configure the terminal device may be understood as follows: The primary access network device and the secondary access network device need to negotiate a capability, and then the primary access network device and the secondary access network device need to separately configure the terminal device based on the negotiated capability. After receiving configurations of the primary access network device and the secondary access network device, the terminal device may determine that the capability of the terminal device is the capability determined by the primary access network device and the secondary access network device through negotiation.

S1120: If the primary access network device supports to determine the configuration of the terminal device based on the current capability of the terminal device, and the secondary access network device also supports to determine the configuration of the terminal device based on the current capability of the terminal device, the primary access network device sends, to the terminal device, an indication for allowing the terminal device to report the current capability of the terminal device.

Alternatively, if the secondary access network device enables the capability update mechanism, and the primary access network device enables the capability update mechanism, the primary access network device sends, to the terminal device, an indication indicating that the terminal device is allowed to report the current capability of the terminal device.

Alternatively, if the secondary access network device supports the capability update mechanism, and the primary access network device supports the capability update mechanism, the primary access network device sends, to the terminal device, an indication indicating that the terminal device is allowed to report the current capability of the terminal device.

S1130: The terminal device sends second information to the primary access network device, and the primary access network device receives the second information, where the second information indicates the current capability of the terminal device.

Optionally, the method 1100 may not include any one of steps S1110 to S1130, and the primary access network device may store the current capability of the terminal device, so that S1140 may be performed.

For descriptions of S1130, refer to the descriptions of S530. A difference lies in that the access network device in S530 may be the primary access network device in the method 1100. Other descriptions are similar to those in S530. To avoid repetition, details are not described again.

Similar to the description in S530, there are two cases in which the second information indicates the current capability of the terminal device.

Case 1: The second information sent by the terminal device may include information about a band combination currently supported by the terminal device and/or information about a feature set corresponding to the currently supported band combination. The information about a band combination currently supported by the terminal device and the information about a feature set corresponding to the currently supported band combination indicate/indicates the current capability of the terminal device.

Optionally, the information about a band combination currently supported by the terminal device includes a correspondence between the band combination currently supported by the terminal device and an index of the currently supported band combination. The information about a feature set corresponding to the currently supported band combination includes a correspondence between the feature set corresponding to the currently supported band combination and an index of the feature set corresponding to the currently supported band combination.

Optionally, the information about a band combination currently supported by the terminal device may indicate the band combination currently supported by the terminal device. In other words, the information about a band combination currently supported by the terminal device may include the band combination currently supported by the terminal device, may include the index of the band combination currently supported by the terminal device, or may not include any explicit indication of the currently supported band combination and may be implicitly indicated by indicating a ranking of the band combination currently supported by the terminal device in a band combination list of the initial capability.

Optionally, the information about a feature set corresponding to the band combination currently supported by the terminal device may indicate the feature set corresponding to the band combination currently supported by the terminal device. In other words, the information about a feature set corresponding to the band combination currently supported by the terminal device may include the feature set corresponding to the band combination currently supported by the terminal device, may include the index of the feature set corresponding to the band combination currently supported by the terminal device, or may not include any explicit indication of the feature set corresponding to the currently supported band combination and may be implicitly indicated by indicating a ranking of the feature set corresponding to the band combination currently supported by the terminal device in a feature set corresponding to a band combination in the initial capability.

Other descriptions of the case 1 are similar to the descriptions of S530. To avoid repetition, details are not described.

Case 2: The second information includes information about a changed band combination and/or information about a feature set corresponding to the changed band combination, and the changed band combination is a band combination that is changed by comparing a band combination currently supported by the terminal device and a band combination corresponding to an initial capability of the terminal device.

Optionally, the changed band combination may be the band combination that is changed by comparing the band combination currently supported by the terminal device and the band combination corresponding to the initial capability of the terminal device. Alternatively, the band combination currently supported by the terminal device and the band combination corresponding to the initial capability of the terminal device are the same, but feature sets corresponding to the band combinations are different. In other words, for the changed band combination, the band combination may change, or the band combination may not change but the feature set corresponding to the band combination changes.

Optionally, the information about a changed band combination includes a correspondence between the changed band combination and an index of the changed band combination. Optionally, the information about a feature set corresponding to the changed band combination includes a correspondence between the feature set corresponding to the changed band combination and an index of the feature set corresponding to the changed band combination.

Optionally, the information about a changed band combination may also indicate the changed band combination. In other words, the information about a changed band combination may include the changed band combination, or may include the index of the changed band combination.

Optionally, the terminal device may determine the band combination that is changed by comparing the band combination currently supported by the terminal device and the band combination that is initially supported and that is included in the initial capability of the terminal device. The second information may include the information about a changed band combination and/or the information about a feature set corresponding to the changed band combination. In this way, the access network device may determine, based on the information about a changed band combination and the information about a band combination included in the initial capability of the terminal device, the information about a band combination currently supported by the terminal device. The access network device may determine, based on the information about a feature set of the changed band combination and information about a feature set of the band included in the initial capability of the terminal device, information about a feature set corresponding to a band combination included in the current capability of the terminal device. In this case, if the information about a band combination in the current capability of the terminal device is the same as the information about a band combination in the initial capability of the terminal device, and the information about the corresponding feature sets is also the same, the second information may not include the information about the same band combinations and the information about the feature sets corresponding to the same band combinations. This can reduce signaling overheads.

Other descriptions of the case 2 are similar to the descriptions of S530. To avoid repetition, details are not described.

S1140: The primary access network device sends seventh information to the secondary access network device, and the secondary access network device receives the seventh information, where the seventh information indicates the current capability of the terminal device.

Optionally, the seventh information includes the second information, that is, the primary access network device sends the second information from the terminal device to the secondary access network device.

Optionally, content included in the seventh information is the same as content included in the second information. In other words, if the second information in the case 1 in S1130 includes the information about a band combination currently supported by the terminal device and/or the information about the feature set corresponding to the currently supported band combination, the seventh information also includes the information about a band combination currently supported by the terminal device and/or the information about the feature set corresponding to the currently supported band combination. If the second information in the case 2 in S1130 includes the information about the changed band combination and/or the information about the feature set corresponding to the changed band combination, the seventh information also includes the information about the changed band combination and/or the information about the feature set corresponding to the changed band combination.

Optionally, content included in the seventh information is different from content included in the second information. In other words, if the second information in the case 2 in S1130 includes the information about a changed band combination and/or the information about a feature set corresponding to the changed band combination. In this way, the primary access network device may determine, based on the information about a changed band combination and the information about a band combination included in the initial capability of the terminal device, the information about a band combination currently supported by the terminal device. The primary access network device may determine, based on the information about a feature set of the changed band combination and information about a feature set of the band included in the initial capability of the terminal device, information about a feature set corresponding to a band combination included in the current capability of the terminal device. The seventh information may include the information about a band combination currently supported by the terminal device and the determined information about a feature set corresponding to the band combination included in the current capability of the terminal device.

Optionally, the primary access network device may obtain the second capability of the terminal device from the core network device. The second capability may be an initial capability of the terminal device. Then, the primary access network device may send the second capability of the terminal device to the secondary access network device. In this way, both the primary access network device and the secondary access network device can store the initial capability of the terminal device.

Optionally, if the primary access network device sends the seventh information to the secondary access network device, and the seventh information indicates (or includes) the current capability of the terminal device, it indicates to determine, based on the current capability of the terminal device, the capability used to configure the terminal device. In other words, if the primary access network device has sent the current capability of the terminal device to the secondary access network device, it indicates that the primary access network device and the secondary access network device need to determine, based on the current capability of the terminal device, the capability used to configure the terminal device. If the primary access network device has sent the current capability of the terminal device to the secondary access network device, when the primary access network device and the secondary access network device subsequently perform capability negotiation to determine the capability used to configure the terminal device, the capability used to configure the terminal device is still determined based on the current capability of the terminal device. In other words, if the primary access network device has sent the current capability of the terminal device to the secondary access network device, the secondary access network device consistently considers that the current capability of the terminal device is valid until the primary access network device indicates the secondary access network device to release the sent current capability of the terminal device (for example, the primary access network device sends, to the secondary access network device, a field indicating the current capability of the terminal device, but content of the field is empty). In this case, the secondary access network device does not consider that the current capability of the terminal device is valid, the capability used to configure the terminal device is no longer determined based on the current capability of the terminal device. Because the primary access network device may store the initial capability of the terminal device and the current capability of the terminal device, and the secondary access network device may also store the initial capability of the terminal device and the current capability of the terminal device, and when the primary access network device has sent the current capability of the terminal device to the secondary access network device and the current capability of the terminal device is valid, the secondary access network device may determine to determine, based on the current capability of the terminal device instead of the initial capability of the terminal device, the capability of the terminal device.

S1150: The primary access network device sends a second message to the secondary access network device, and the secondary access network device receives the second message. The second message indicates sixth information, and the sixth information indicates first candidate capability information.

Optionally, the first candidate capability information includes an index of a candidate capability and an index of a feature set corresponding to the candidate capability. The candidate capability is a capability in the current capability of the terminal device. In other words, the primary access network device needs to send, to the secondary access network device, a candidate capability selected by the primary access network device from the current capability of the terminal device and a feature set corresponding to the candidate capability.

Optionally, the first candidate capability information is information about a candidate band combination, and the information about a candidate band combination includes an index of the candidate band combination and an index of a feature set corresponding to the candidate band combination. Optionally, the information about a candidate band combination may be information about an allowed band combination list, where the information about an allowed band combination list includes an index of one or more allowed band combinations and information about an allowed feature set list corresponding to the one or more allowed band combinations, and the information about an allowed feature set list includes an index of one or more allowed feature sets.

Optionally, the first candidate capability information indicates an index of one or more candidate capabilities and an index of one or more feature sets corresponding to the one or more candidate capabilities. Alternatively, the first candidate capability information is information about an allowed band combination list, and the information about an allowed band combination list indicates an index of one or more allowed band combinations and an index of one or more allowed feature sets corresponding to the one or more allowed band combinations. The information about an allowed band combination list is selected by the primary access network, to allow the secondary access network device to select the capability of the terminal device from the allowed band combination list.

Optionally, for the case 1 in S1130, the primary access network device determines the candidate band combination from the band combination currently supported by the terminal device, and determines the index of the candidate band combination from the index of the band combination currently supported by the terminal device. The primary access network device determines the feature set corresponding to the candidate band combination from the feature set corresponding to the band combination currently supported by the terminal device, and the primary access network device determines the index of the feature set corresponding to the candidate band combination from the index of the feature set corresponding to the band combination currently supported by the terminal device.

Optionally, for the case 2 in S1130, the primary access network device needs to determine, based on the changed band combination and the band combination corresponding to the initial capability of the terminal device, the band combination currently supported by the terminal device. The primary access network device determines, based on the index of the changed band combination and the index of the band combination corresponding to the initial capability of the terminal device, the index of the band combination currently supported by the terminal device. The primary access network device may determine the candidate band combination from the determined band combination currently supported by the terminal device, and determine the index of the candidate band combination from the determined index of the band combination currently supported by the terminal device. The primary access network device determines, based on the feature set of the changed band combination of the terminal device and the feature set of the band combination corresponding to the initial capability of the terminal device, the feature set of the band combination currently supported by the terminal device. The primary access network device determines, based on the index of the feature set of the changed band combination of the terminal device and the index of the feature set of the band combination corresponding to the initial capability of the terminal device, the index of the feature set corresponding to the band combination currently supported by the terminal device. The primary access network device determines, from the determined index of the feature set corresponding to the band combination currently supported by the terminal device, the index of the feature set corresponding to the candidate band combination.

Optionally, the second message may be an inter-node (inter-node) message used by the primary access network device and the secondary access network device to negotiate to determine the third capability of the terminal device.

Optionally, S1140 and S1150 may be simultaneously performed, or may be separately performed. An execution sequence of S1140 and S 1150 is not limited in this embodiment of this application. If S1140 and S1150 are simultaneously performed, the second message in S1150 may also include the seventh information in S1140.

S1160: The secondary access network device sends a response message of the second message to the primary access network device, and the primary access network device receives the response message, where the response message indicates a third capability, and the third capability is obtained based on the first candidate capability information.

In other words, the secondary access network device may select the third capability from a candidate capability that is indicated by the first candidate capability information and that is sent by the primary access network device, and select, from a feature set corresponding to the candidate capability, a feature set corresponding to the third capability.

Optionally, after the secondary access network device receives the seventh information, if the seventh information includes the current capability of the terminal device, it indicates to determine, based on the current capability of the terminal device, the capability used to configure the terminal device. In other words, if the primary access network device has sent the current capability of the terminal device to the secondary access network device, it indicates that the primary access network device and the secondary access network device need to determine, based on the current capability of the terminal device, the capability of the terminal device. Because the secondary access network device may store the initial capability of the terminal device and the current capability of the terminal device, and when the primary access network device has sent the current capability of the terminal device to the secondary access network device, the secondary access network device may determine to determine, based on the current capability of the terminal device instead of the initial capability of the terminal device, the third capability of the terminal device.

Optionally, that the secondary access network device determines the third capability of the terminal device based on the current capability of the terminal device may include: after receiving the first candidate capability information, the secondary access network device determines that an index of the candidate capability indicated by the first candidate capability information is an index in an index of the current capability of the terminal device, and an index of a feature set corresponding to the candidate capability indicated by the first candidate capability information is an index of a feature set corresponding to the current capability of the terminal device. Therefore, the secondary access network device selects, based on an implementation of the secondary access network device, the third capability from a candidate capability included in the current capability of the terminal device, and selects, from the feature set corresponding to the current capability, the feature set corresponding to the third capability.

Optionally, the response message may indicate an index of the third capability and an index of the feature set corresponding to the third capability.

Optionally, the first candidate capability information is information about a candidate band combination, and the information about a candidate band combination includes an index of the candidate band combination and an index of a feature set corresponding to the candidate band combination. The following provides descriptions with reference to the two cases in S1130. The secondary access network device selects an index of a target band combination from the index of the candidate band combination, and selects an index of a target feature set from the index of the feature set corresponding to the selected target band combination. Optionally, the information about a candidate band combination may be information about an allowed band combination list, where the information about an allowed band combination list includes an index of one or more allowed band combinations and information about an allowed feature set list corresponding to the one or more allowed band combinations, and the information about an allowed feature set list includes an index of one or more allowed feature sets. The secondary access network device determines one "index of a selected band combination" from the index of the one or more allowed band combinations, and determines one "index of a feature set" (which may also be referred to as an "index of a selected feature set" or an "index of a requested feature set") from the index of the one or more allowed feature sets corresponding to the "index of the selected band combination".

Optionally, for the case 1 in S1130, the secondary access network device selects the index of the target band combination from the index of the band combination currently supported by the terminal device, and the secondary access network device determines the target feature set from the index of the feature set corresponding to the target band combination. The target band combination and the target feature set correspond to the third capability of the terminal device.

Optionally, for the case 2 in S1130, the secondary access network device needs to determine, based on the changed band combination of the terminal device and the band combination corresponding to the initial capability of the terminal device, the band combination currently supported by the terminal device. The secondary access network device determines, based on the index of the changed band combination and the index of the band combination of the terminal device corresponding to the initial capability of the terminal device, the index of the band combination currently supported by the terminal device. The secondary access network device determines that the index of the candidate band combination is selected from the index of the band combination currently supported by the terminal device. The secondary access network device may select the target band combination from the candidate band combination based on an implementation of the secondary access network device, and determine the index of the target band combination from the index of the candidate band combination. The secondary access network device determines, based on the feature set of the changed band combination of the terminal device and the feature set of the band combination corresponding to the initial capability of the terminal device, the feature set of the band combination currently supported by the terminal device. The secondary access network device determines that the index of the feature set corresponding to the candidate band combination is selected from the index of the feature set corresponding to the band combination currently supported by the terminal device. The secondary access network device determines, from the index of the feature set corresponding to the candidate band combination based on an implementation of the secondary access network device, the index of the feature set corresponding to the target band combination.

S 1170: The primary access network device configures the terminal device based on the third capability.

Specifically, both the primary access network device and the secondary access network device configure the terminal based on the third capability determined through negotiation, and the primary access network device configures a configuration of a master cell group of the terminal device, so that a common configuration of the master cell group and a secondary cell group of the terminal device does not exceed the current capability of the terminal device.

S1180: The secondary access network device configures the terminal device based on the third capability.

Specifically, both the primary access network device and the secondary access network device configure the terminal based on the third capability determined through negotiation, and the secondary access network device configures a configuration of the secondary cell group of the terminal device, so that a common configuration of a master cell group and the secondary cell group of the terminal device does not exceed the current capability of the terminal device.

Optionally, a sequence of S1170 and S1180 is not limited, and S1170 may be performed before, after, or at the same time of S1180.

In the method 1100, the primary access network device may send the seventh information to the secondary access network device. The seventh information has indicated the current capability of the terminal device, to indicate that the primary access network device and the secondary access network device determine the capability of the terminal device based on the current capability of the terminal device. In this implicit indication manner, signaling overheads can be avoided.

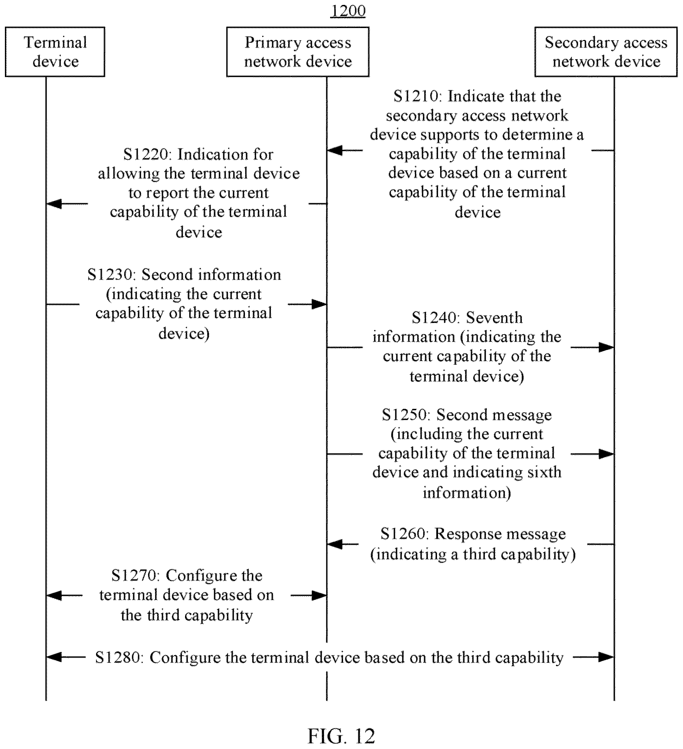

The following describes a configuration method with reference to a method 1200 shown in FIG. 12. As shown in FIG. 12, the method 1200 includes the following steps.

S1210 to S1240 are respectively the same as S1110 to S1140.

S1250: The primary access network device sends a second message to the secondary access network device, and the secondary access network device receives the second message. The second message includes a current capability of the terminal device. The second message further indicates sixth information, and the sixth information indicates first candidate capability information.

Optionally, if the second message includes (or indicates) the current capability of the terminal device, it indicates to determine, based on the current capability of the terminal device, the capability used to configure the terminal device. In other words, if the primary access network device sends the current capability of the terminal device when sending the sixth information to the secondary access network device, it indicates that the primary access network device and the secondary access network device need to determine, based on the current capability of the terminal device, the capability used to configure the terminal device. If the primary access network device does not send the current capability of the terminal device when sending the sixth information to the secondary access network device, it indicates that the primary access network device and the secondary access network device do not determine, based on the current capability of the terminal device, the capability used to configure the terminal device. In other words, if the primary access network device and the secondary access network device perform capability negotiation and send the current capability of the terminal device, the secondary access network device currently considers that the current capability of the terminal device is valid. If the primary access network device and the secondary access network device perform capability negotiation but do not send the current capability of the terminal device, the secondary access network device currently does not consider that the current capability of the terminal device is valid, and no longer determines, based on the current capability of the terminal device, the capability used to configure the terminal device. Because the primary access network device may store the initial capability of the terminal device, and the secondary access network device may also store the initial capability of the terminal device, and when the primary access network device has sent the current capability of the terminal device to the secondary access network device, the secondary access network device may determine to determine, based on the current capability of the terminal device instead of the initial capability of the terminal device, the capability of the terminal device.

Optionally, if the second message includes the current capability of the terminal device, the second message implicitly indicates fifth information, and the fifth information indicates to determine, based on the current capability of the terminal device, the capability used to configure the terminal device.

Optionally, the second message may include the seventh information in S1240, and the seventh information indicates the current capability of the terminal device. In this way, it may also be understood that the second message includes the current capability of the terminal device, implicitly indicates the fifth information, and the fifth information indicates to determine, based on the current capability of the terminal device, the capability used to configure the terminal device.

Optionally, the second message may be an inter-node (inter-node) message used by the primary access network device and the secondary access network device to negotiate to determine the third capability of the terminal device.

For the first candidate capability information in S1250, refer to the description in S1150. To avoid repetition, details are not described again.

S1260 to S1280 are respectively the same as S1160 to S1180.

In the method 1200, after the primary access network device indicates the current capability of the terminal device to the secondary access network device, the primary access network device may include the current capability of the terminal device in the second message sent to the secondary access network device each time, to indicate to determine, based on the current capability of the terminal device instead of the initial capability of the terminal device, the capability used to configure the terminal device.

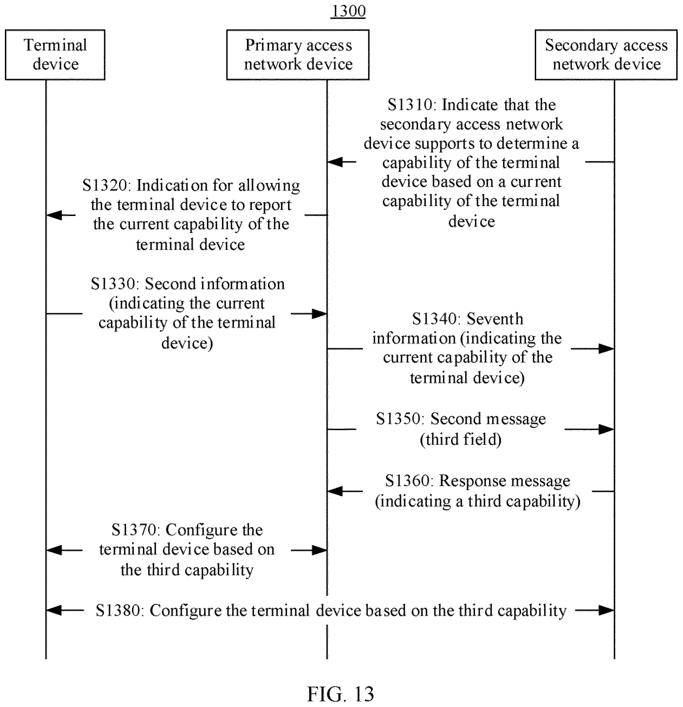

The following describes a configuration method 1300 with reference to FIG. 13. The method 1300 includes the following steps.

S1310 to S1340 are respectively the same as S1110 to S1140.

S1350: The primary access network device sends a second message to the secondary access network device, and the secondary access network device receives the second message, where the second message includes a third field, and an information bit carried in the third field indicates first candidate capability information. The third field indicates to determine, based on the current capability of the terminal device, that the capability used to configure the terminal device.

Optionally, the information bit carried in the third field indicates sixth information, and the sixth information indicates the first candidate capability information.

Optionally, the third field indicates fifth information, and the fifth information indicates to determine, based on the current capability of the terminal device, the capability used to configure the terminal device. In other words, when the primary access network device sends the second message to the secondary access network device, the third field indicating the first candidate capability information indicates to determine, based on the current capability of the terminal device, the capability used to configure the terminal device. For example, if the second message carries the third field, it indicates to determine, based on the current capability of the terminal device, the capability used to configure the terminal device. If the second message does not carry the third field, it indicates to determine, based on the initial capability of the terminal device, the capability used to configure the terminal device. The secondary access network device determines, based on the third field, whether to determine, based on the current capability of the terminal device, the capability used to configure the terminal device. This implicit indication is used to determine, based on the current capability of the terminal device, the capability used to configure the terminal device, so that signaling overheads can be reduced.

S1360: The secondary access network device sends a response message of the second message to the primary access network device, where the response message indicates the third capability. The third capability is obtained based on the first candidate capability information.

In other words, the secondary access network device may select the third capability from a candidate capability that is indicated by the first candidate capability information and that is sent by the primary access network device, and select, from a feature set corresponding to the candidate capability, a feature set corresponding to the third capability.

Optionally, the response message further indicates that the third capability is determined based on the current capability of the terminal device. Optionally, the response message further indicates fifth information, and the fifth information indicates that the third capability is determined based on the current capability of the terminal device.

Optionally, an information bit carried in a field included in the response message indicates that the third capability is determined based on the current capability of the terminal device.

Optionally, the response message includes a fourth field, an information bit carried in the fourth field indicates the third capability, and the fourth field indicates that the third capability is determined based on the current capability of the terminal device. In other words, when the secondary access network device sends the response message of the second message to the primary access network device, the fourth field indicating the third capability indicates to determine, based on the current capability of the terminal device, the third capability used to configure the terminal device. For example, if the response message of the second message carries the fourth field, it indicates to determine, based on the current capability of the terminal device, the third capability used to configure the terminal device. If the response message of the second message does not carry the fourth field, it indicates to determine, based on the initial capability of the terminal device, the third capability used to configure the terminal device. The primary access network device determines, based on the fourth field, whether the secondary access network device determines, based on the current capability of the terminal device, the third capability used to configure the terminal device. In this implicit indication manner, signaling overheads can be reduced.

It should be noted that, for how the secondary access network device determines the third capability based on the first candidate capability information in S1360, refer to the descriptions of S1160. To avoid repetition, details are not described again.

S1370 to S1380 are respectively the same as S1170 to S1180.

In the method 1300, when indicating the first candidate capability information to the secondary access network device, the primary access network device may indicate, based on the location of the third field that carries the first candidate capability information, to determine, based on the current capability of the terminal device instead of the initial capability of the terminal device, the capability used to configure the terminal device. In this implicit indication manner, signaling overheads can be reduced.

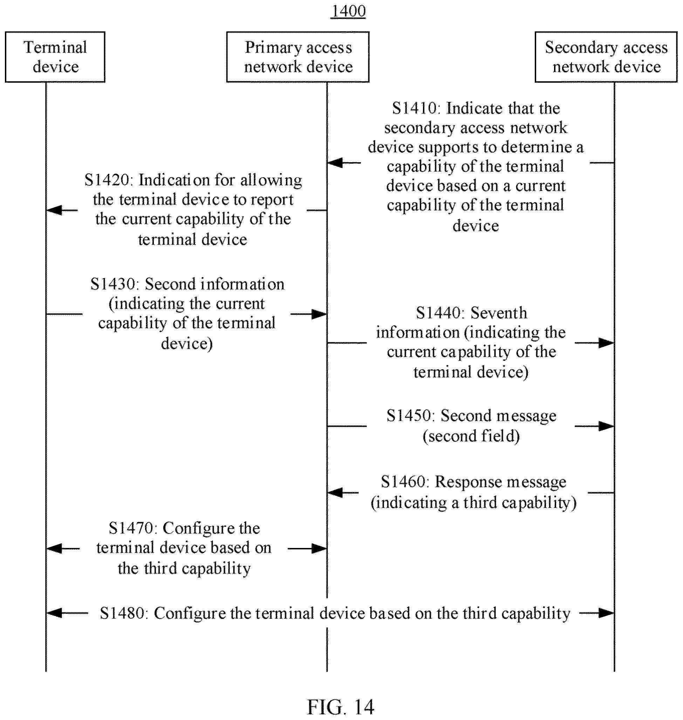

The following describes a configuration method 1400 with reference to FIG. 14. As shown in FIG. 14, the method 1400 includes the following steps.

S1410 to S1440 are respectively the same as S1110 to S1140.

S1450: The primary access network device sends a second message to the secondary access network device, and the secondary access network device receives the second message, where the second message includes a second field, and an information bit carried in the second field indicates to determine, based on the current capability of the terminal device, the capability used to configure the terminal device. The second message indicates first candidate capability information.

Optionally, the information bit carried in the second field indicates fifth information, and the fifth information indicates to determine, based on the current capability of the terminal device, the capability used to configure the terminal device.

Optionally, a length of the second field is 1 bit. For example, if the information bit of the second field is 1, it indicates to determine, based on the current capability of the terminal device, the capability used to configure the terminal device, and if an information bit of the second field is 0, it indicates to determine, based on the initial capability of the terminal device, the capability used to configure the terminal device.

Optionally, the second message includes a fifth field, an information bit carried in the fifth field indicates the first candidate capability information.

Optionally, the second message includes a fifth field, an information bit carried in the fifth field indicates the sixth information, and the sixth information indicates the first candidate capability information.

S1460 to S1480 are respectively the same as S1160 to S1180.

In the method 1400, when sending the second message to the secondary access network device, the primary access network device may indicate, based on the information bit carried in the second field in the second message, to determine, based on the current capability of the terminal device, the capability used to configure the terminal device.

In the method 1100 to the method 1400, that four different manners are used to indicate to determine, based on the current capability of the terminal device, the capability used to configure the terminal device are described.

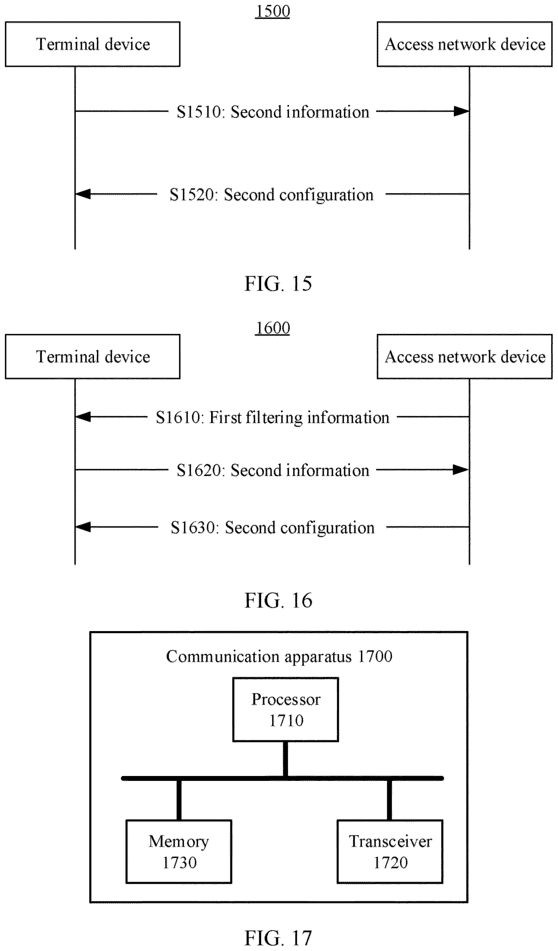

In the foregoing method embodiment, that the second information sent by the terminal device indicates the current capability of the terminal device may be used as an independent embodiment. The following describes a method 1500 for sending the current capability of the terminal device by the terminal device with reference to the method 1500 in FIG. 15. As shown in FIG. 15, the method 1500 includes the following steps.

S1510: A terminal device sends second information to an access network device, where the second information indicates a current capability of the terminal device.

The current capability of the terminal device may include a capability related to a single carrier of the terminal device and/or a capability related to a primary cell in which the terminal device is currently located.

For descriptions of S1510, refer to the descriptions of S530. To avoid repetition, details are not described.

Optionally, before S1510, the method 1500 includes: The access network device sends eighth information to the terminal device, where the eighth information indicates that the terminal device is allowed to send a current capability of the terminal device. In other words, when the access network device allows the terminal device to send the current capability of the terminal device, the terminal device may perform S1510.

S1520: The access network device sends a second configuration to the terminal device based on the second information.

Optionally, the access network device may determine the current capability of the terminal device based on the second information, and determine, based on the current capability of the terminal device, the second configuration used to configure the terminal device. In this way, the terminal device may perform data transmission with the access network device based on the second configuration.

For example, the second information sent by the terminal device indicates that a maximum bandwidth currently supported by the terminal device is 100M, and the access network device may determine, based on the maximum bandwidth 100M supported by the terminal device, that a bandwidth used by the terminal device is 80M. In this case, the second configuration sent by the access network device to the terminal device may configure the terminal device to use the bandwidth of 80M. In other words, the second configuration is determined based on the maximum bandwidth 100M supported by the terminal device.

Optionally, the access network device in the method 1500 may be replaced with the primary access network device in the foregoing method 1100 to method 1400.

In the foregoing method 1500, the second information sent by the terminal device to the access network device may indicate the current capability of the terminal device. The current capability of the terminal device includes the capability related to the single carrier of the terminal device and/or the capability related to the primary cell in which the terminal device is currently located. The second information neither indicates a capability unrelated to the single carrier of the terminal device nor indicates a capability unrelated to the primary cell in which the terminal device is currently located, so that signaling overheads can be reduced.

With reference to the method 1600 in FIG. 16, the following describes another method 1600 for sending the current capability of the terminal device by the terminal device. As shown in FIG. 16, the method 1600 includes the following steps.

S1610: An access network device sends first filtering information to a terminal device, and the terminal device receives the first filtering information.

Optionally, the method 1600 includes: The access network device sends eighth information to the terminal device, where the eighth information indicates that the terminal device is allowed to send a current capability of the terminal device. In other words, when the access network device allows the terminal device to send the current capability of the terminal device, the terminal device may perform S1620.

For descriptions of the first filtering information, refer to the descriptions in the method 500. To avoid repetition, details are not described.

Optionally, the access network device may send both the first filtering information and the eighth information to the terminal device, or may separately send the first filtering information and the eighth information to the terminal device. This is not limited in this embodiment of this application.

S1620: The terminal device sends second information to the access network device based on the first filtering information, and the access network device receives the second information, where the second information indicates the current capability of the terminal device.

Optionally, after determining the current capability of the terminal device based on the first filtering information, the terminal device may also send the first filtering information when sending the second information. The second information corresponds to the first filtering information, to indicate that the current capability that is of the terminal device and that is indicated by the second information is obtained based on the first filtering information.

S1630: The access network device sends a second configuration to the terminal device based on the second information.

For S1630, refer to the descriptions of S1520. To avoid repetition, details are not described.

Optionally, the access network device in the method 1600 may be replaced with the primary access network device in the foregoing method 1100 to method 1400.

In the foregoing method 1600, the second information sent by the terminal device to the access network device may indicate the current capability of the terminal device, the current capability of the terminal device is a capability obtained based on the first filtering information, and the second information does not indicate a capability unrelated to the first filtering information, so that signaling overheads can be reduced.

Optionally, the capability of the terminal device mentioned in this embodiment of this application may be an air interface capability of the terminal device. For example, the first capability, the second capability, the initial capability, the current capability, the temporary capability, or the currently used capability may be the air interface capability of the terminal device.

Optionally, the "current capability" in this embodiment of this application may be replaced with the "temporary capability", or may be replaced with the "updated capability". Alternatively, the "current capability" is a capability different from the "initial capability" stored in the core network device, and is a capability stored only in the access network device.

Optionally, in this embodiment of this application, the second information sent by the terminal device includes a correspondence between the band combination currently supported by the terminal device and the index of the band combination currently supported by the terminal device. This may be replaced with the following: The second information sent by the terminal device includes the band combination currently supported by the terminal device, and a different location of the band combination in the second information may implicitly indicate the index of the band combination. In other words, the index of the band combination may also be implicitly indicated without being explicitly indicated.

The foregoing describes the method embodiments provided in this application, and the following describes apparatus embodiments provided in this application. It should be understood that descriptions of apparatus embodiments correspond to the descriptions of the method embodiments. Therefore, for content that is not described in detail, refer to the foregoing method embodiments. For brevity, details are not described herein again.

FIG. 17 shows a communication apparatus 1700 according to an embodiment of this application. The communication apparatus 1700 includes a processor 1710 and a transceiver 1720. The processor 1710 and the transceiver 1720 communicate with each other through an internal connection path. The processor 1710 is configured to execute instructions, to control the transceiver 1720 to send a signal and/or receive a signal.

Optionally, the communication apparatus 1700 may further include a memory 1730. The memory 1730 communicates with the processor 1710 and the transceiver 1720 through an internal connection path. The memory 1730 is configured to store instructions, and the processor 1710 may execute the instructions stored in the memory 1730. In a possible implementation, the communication apparatus 1700 is configured to implement procedures and steps corresponding to the terminal device in the foregoing method embodiment. In another possible implementation, the communication apparatus 1700 is configured to implement procedures and steps corresponding to the access network device in the foregoing method embodiment. In another possible implementation, the communication apparatus 1700 is configured to implement procedures and steps corresponding to the primary access network device in the foregoing method embodiment. In another possible implementation, the communication apparatus 1700 is configured to implement procedures and steps corresponding to the secondary access network device in the foregoing method embodiment.

It should be understood that the communication apparatus 1700 may be specifically the terminal device, the access network device, the primary access network device, or the secondary access network device in the foregoing embodiment, or may be a chip or a chip system. Correspondingly, the transceiver 1720 may be a transceiver circuit of the chip. This is not limited herein. Specifically, the communication apparatus 1700 may be configured to perform steps and/or procedures corresponding to the terminal device, the access network device, the primary access network device, or the secondary access network device in the foregoing method embodiment. Optionally, the memory 1730 may include a read-only memory and a random access memory, and provide instructions and data for the processor. A part of the memory may further include a non-volatile random access memory. For example, the memory may further store information of a device type. The processor 1710 may be configured to execute the instructions stored in the memory. When the processor 1710 executes the instructions stored in the memory, the processor 1710 is configured to perform the steps and/or procedures of the method embodiment corresponding to the terminal device, the access network device, the primary access network device, or the secondary access network device.

In an implementation process, the steps in the foregoing methods can be implemented by using a hardware integrated logical circuit in the processor, or by using instructions in a form of software. The steps of the method disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the method provided in embodiments of this application, this application further provides a computer program product. The computer program product includes computer program code. When the computer program code is run on a computer, so that the computer performs the steps or procedures performed by the terminal device, the access network device, the primary access network device, or the secondary access network device in the foregoing method embodiment.

According to the method provided in embodiments of this application, this application further provides a computer-readable storage medium. The computer-readable storage medium stores program code. When the program code is run on a computer, so that the computer performs the steps or procedures performed by the terminal device, the access network device, the primary access network device, or the secondary access network device in the foregoing method embodiment.

According to the method provided in embodiments of this application, this application further provides a communication system. The communication system includes the foregoing one or more terminal devices and one or more access network devices, or includes the foregoing one or more terminal devices, one or more primary access network devices, and one or more secondary access network devices.

The foregoing apparatus embodiments completely correspond to the method embodiments, and corresponding modules or units perform corresponding steps. For example, a communication unit (a transceiver) performs a receiving step or a sending step in the method embodiments, and a processing unit (a processor) may perform steps other than the sending step and the receiving step. A function of a specific unit may be based on a corresponding method embodiment. There may be one or more processors.

In this application, "indication" may include a direct indication and an indirect indication, or may include an explicit indication and an implicit indication. Information indicated by specific information is referred to as to-be-indicated information. In a specific implementation process, the to-be-indicated information may be indicated in many manners. For example, without limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

In embodiments of this application, the terms and English abbreviations are all examples given for ease of description, and should not constitute any limitation on this application. This application does not exclude a possibility of defining another term that can implement a same or similar function in an existing or future protocol.

It should be understood that "and/or" in this specification describes an association relationship between associated objects and represents that three relationships may exist. For example, A and/or B may represent the following three cases: Only A exists, both A and B exist, and only B exists. A and B may be singular or plural. The character "/" generally indicates an "or" relationship between the associated objects.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatuses, and units, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

In the foregoing embodiments, all or some of the functions of the function units may be implemented by using software, hardware, firmware, or any combination thereof. When software is used to implement embodiments, all or a part of embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A configuration method, wherein the method is applied to a terminal device and comprises:
sending first information to an access network device, wherein the first information indicates to reduce a capability of the terminal device; and
receiving a first configuration from the access network device, wherein a first capability that is of the terminal device and that corresponds to the first configuration is lower than a second capability of the terminal device.

2. The method according to claim 1, wherein the second capability is a capability stored in a core network device.

3. The method according to claim 1 or 2, wherein before the sending first information to an access network device, the method further comprises:
determining that a current capability of the terminal device is lower than the second capability.

4. The method according to any one of claims 1 to 3, wherein the method further comprises:
receiving a system message broadcast by the access network device, wherein the system message comprises third information, and the third information indicates that the terminal device is allowed to send an indication for reducing the capability of the terminal device.

5. The method according to any one of claims 1 to 4, wherein the first capability that is of the terminal device and that corresponds to the first configuration comprises allowing the terminal device to send the current capability.

6. A configuration method, wherein the method is applied to a terminal device and comprises:
receiving a third configuration of the terminal device from an access network device; and
indicating, to the access network device, that a capability that is of the terminal device and that corresponds to the third configuration of the terminal device exceeds a current capability of the terminal device.

7. The method according to claim 6, wherein the indicating, to the access network device, that a capability that is of the terminal device and that corresponds to the third configuration of the terminal device exceeds a current capability of the terminal device comprises:
when keeping a current configuration unchanged, indicating, by the terminal device to the access network device, that the capability that is of the terminal device and that corresponds to the third configuration of the terminal device exceeds the current capability of the terminal device.

8. The method according to claim 6 or 7, wherein the capability that is of the terminal device and that corresponds to the third configuration is a capability stored in a core network device.

9. The method according to any one of claims 6 to 8, wherein the indicating, to the access network device, that a capability that is of the terminal device and that corresponds to the third configuration of the terminal device exceeds a current capability of the terminal device comprises:
sending a first message to the access network device, wherein the first message comprises a first field, and an information bit carried in the first field indicates that the capability that is of the terminal device and that corresponds to the third configuration of the terminal device exceeds the current capability of the terminal device; or
sending, by the terminal device, second information to the access network device, wherein the second information indicates the current capability of the terminal device.

10. The method according to any one of claims 6 to 8, wherein the capability that is of the terminal device and that corresponds to the third configuration comprises allowing the terminal device to send the current capability.

11. The method according to claim 5 or 10, wherein the method further comprises:
sending second information to the access network device, wherein the second information indicates the current capability of the terminal device; and
receiving a second configuration from the access network device, wherein the second configuration is determined based on the current capability of the terminal device.

12. The method according to claim 11, wherein the method further comprises:
receiving first filtering information from the access network device; and
the sending second information to the access network device comprises:
sending the second information to the access network device based on the first filtering information, wherein the current capability that is of the terminal device and that is indicated by the second information is a capability related to the first filtering information.

13. The method according to claim 12, wherein the current capability of the terminal device comprises a capability related to a single carrier of the terminal device and/or a capability related to a primary cell in which the terminal device is currently located.

14. The method according to any one of claims 11 to 13, wherein
the second information comprises information about a band combination currently supported by the terminal device and information about a feature set corresponding to the band combination; or
the second information comprises information about a changed band combination and information about a feature set corresponding to the changed band combination, and the changed band combination is a band combination that is changed by comparing a band combination currently supported by the terminal device and a band combination corresponding to a second capability.

15. A configuration method, wherein the method is applied to an access network device and comprises:
receiving first information, wherein the first information indicates to reduce a capability of a terminal device; and
sending a first configuration, wherein a first capability that is of the terminal device and that corresponds to the first configuration is lower than a second capability of the terminal device.

16. The method according to claim 15, wherein the second capability is a capability stored in a core network device.

17. The method according to claim 15 or 16, wherein the method further comprises:
broadcasting a system message, wherein the system message comprises third information, and the third information indicates that the terminal device is allowed to send an indication for reducing the capability of the terminal device.

18. The method according to any one of claims 15 to 17, wherein the capability that is of the terminal device and that corresponds to the first configuration comprises allowing to send a current capability of the terminal device.

19. A configuration method, wherein the method is applied to an access network device and comprises:
sending a third configuration of a terminal device to the terminal device; and
learning, from the terminal device, that a capability that is of the terminal device and that corresponds to the third configuration of the terminal device exceeds a current capability of the terminal device.

20. The method according to claim 19, wherein the capability that is of the terminal device and that corresponds to the third configuration is a capability stored in a core network device.

21. The method according to claim 19 or 20, wherein the learning, from the terminal device, that a capability that is of the terminal device and that corresponds to the third configuration of the terminal device exceeds a current capability of the terminal device comprises:
receiving a first message from the terminal device, wherein the first message comprises a first field, and an information bit carried in the first field indicates that the capability that is of the terminal device and that corresponds to the third configuration of the terminal device exceeds the current capability of the terminal device; or
receiving second information from the terminal device, wherein the second information indicates the current capability of the terminal device.

22. The method according to claim 19 or 20, wherein the capability that is of the terminal device and that corresponds to the third configuration comprises allowing the terminal device to send the current capability.

23. The method according to claim 18 or 22, wherein the method further comprises:
receiving second information from the terminal device, wherein the second information indicates the current capability of the terminal device; and
sending a second configuration to the terminal device, wherein the second configuration is determined based on the current capability of the terminal device.

24. The method according to claim 23, wherein the method further comprises:
sending first filtering information to the terminal device, wherein the current capability that is of the terminal device and that is indicated by the second information is a capability related to the first filtering information.

25. The method according to claim 23, wherein the current capability of the terminal device comprises a capability related to a single carrier of the terminal device and/or a capability related to a primary cell in which the terminal device is currently located.

26. The method according to any one of claims 23 to 25, wherein the second information comprises information about a band combination currently supported by the terminal device and information about a feature set corresponding to the band combination; or
the second information comprises information about a changed band combination and information about a feature set corresponding to the changed band combination, and the changed band combination is a band combination that is changed by comparing a band combination currently supported by the terminal device and a band combination corresponding to a second capability.

27. An electronic device, comprising a processor, wherein the processor is coupled to a memory, and the processor is configured to execute a computer program or instructions stored in the memory, so that the electronic device is enabled to implement the method according to any one of claims 1 to 26.

28. A computer-readable storage medium, wherein the computer-readable storage medium stores computer instructions, and when the computer instructions are run on an electronic device, the electronic device is enabled to perform the method according to any one of claims 1 to 26.
